(19) Europäisches Patentamt
European Patent Office
Office européen des brevets

(11) EP 4 169 757 B1

(12) **EUROPEAN PATENT SPECIFICATION**

(45) Date of publication and mention of the grant of the patent:
**28.01.2026 Bulletin 2026/05**

(21) Application number: **21826417.4**

(22) Date of filing: **18.06.2021**

(51) International Patent Classification (IPC):
***G02B 27/01*** *(2006.01)* ***B60J 1/00*** *(2006.01)*
***B60J 1/02*** *(2006.01)* ***B32B 17/10*** *(2006.01)*
***B32B 27/22*** *(2006.01)* ***B32B 33/00*** *(2006.01)*
***G06F 1/16*** *(2006.01)* ***G09F 19/16*** *(2006.01)*
*G02B 5/30* *(2006.01)*

(52) Cooperative Patent Classification (CPC):
(C-Sets available)
**G09F 9/35; B32B 7/022; B32B 7/023; B32B 7/12; B32B 17/10036; B32B 17/10458; B32B 17/10605; B32B 17/10761; B32B 17/10935; B32B 23/08; B32B 23/20; B32B 27/08; B32B 27/22; B32B 27/30; B60K 35/23;** (Cont.)

(86) International application number:
**PCT/JP2021/023148**

(87) International publication number:
**WO 2021/256554 (23.12.2021 Gazette 2021/51)**

# (54) OPTICAL LAMINATE FOR HEAD-UP DISPLAY, FUNCTIONAL GLASS, AND HEAD-UP DISPLAY SYSTEM

OPTISCHES LAMINAT FÜR HEAD-UP-ANZEIGE, FUNKTIONELLES GLAS UND HEAD-UP-ANZEIGESYSTEM

STRATIFIÉ OPTIQUE POUR UN AFFICHAGE TÊTE HAUTE, VERRE FONCTIONNEL ET SYSTÈME D'AFFICHAGE TÊTE HAUTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.06.2020 JP 2020105159**

(43) Date of publication of application:
**26.04.2023 Bulletin 2023/17**

(73) Proprietor: **Nippon Kayaku Kabushiki Kaisha**
**Tokyo 100-0005 (JP)**

(72) Inventors:
- **TAKAHASHI, Chihiro**
  **Tokyo 115-8588 (JP)**
- **YOKOYAMA, Yui**
  **Tokyo 115-8588 (JP)**

(74) Representative: **Hentrich Patent- & Rechtsanwaltspartnerschaft mbB**
**Syrlinstraße 35**
**89073 Ulm (DE)**

(56) References cited:
**WO-A1-2018/168726**
**WO-A1-2020/067338**
**WO-A1-2020/067338**
**WO-A1-2020/075747**
**JP-A- 2005 091 900**
**JP-A- 2005 091 900**
**JP-A- 2008 069 235**
**JP-A- 2017 198 981**
**JP-A- 2019 094 257**
**JP-A- 2019 172 512**
**JP-A- H08 169 257**
**US-A1- 2017 235 030**
**US-A1- 2021 394 493**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**G02B 1/04; G02B 27/0101; G06F 1/1639; G09F 19/16; G09F 21/049;** B32B 2255/10; B32B 2255/26; B32B 2307/412; B32B 2307/42; B32B 2307/706; B32B 2307/7376; B32B 2605/08; B60K 35/22; B60K 2360/23; B60K 2360/25; G02B 5/3083; G02B 2027/012; G06F 2200/1634

C-Sets
**B32B 17/10005, B32B 2317/18; G02B 1/04, C08L 29/14**

## Description

### Technical Field

The present invention relates to an optical laminate and functional glass, for example, suitable for use in a head-up display, and further to a head-up display using the optical laminate and the functional glass.

### Background Art

A navigation system, a head-up display (hereinafter also referred to as a "HUD"), and the like are used as methods for displaying information to drivers of cars and airplanes. A HUD is a system which projects images projected from image display units such as a liquid crystal display (hereinafter also referred to as an "LCD"), for example, on a windshield of a car or the like.

Emission light emitted from image display units is reflected on a reflecting mirror and further reflected on a windshield, and then reaches an observer. Although the observer sees the image projected on the windshield, it appears as if the image were at an image position beyond the windshield. In this method, since the driver can obtain various pieces of information in a state in which the driver gazes ahead of the windshield almost without moving their sight line, a HUD is safer than conventional car navigation systems, in which drivers had to move their sight lines.

A problem was that, although, in a HUD system, display information was projected while being superimposed on a scene actually seen through a windshield, the display light was reflected on the two surfaces inside and outside the windshield, resulting in the reflected image being a double image, and causing the display information to be difficult to see.

With respect to this problem, it is known that the problem of double-image of the reflected image can be improved using a phase difference element which can change a polarization direction by 90° for the windshield for cars. For example, in Patent Literature 1, it is disclosed that when display light converted into S polarized light comes into a windshield for cars including a film-like optical rotator therein at a Brewster angle, some of the S polarized light is reflected on the inner surface of the windshield of a car, S polarized light transmitted through the surface is converted into P polarized light by an optical rotator, and all of the P polarized light is further emitted from the outer surface of the windshield of the car to outside of the car to prevent a double image.

As another method for suppressing double image, a technique is known in which P polarized light comes in using a light control film in which a circularly polarized light reflecting film manufactured using a cholesteric liquid crystal layer is clamped between two 1/4 wavelength plates (Patent Literature 2). In this technique, the conversion of linear polarized light coming in into circularly polarized light with a 1/4 wavelength plate and the reflection of the circularly polarized light on the light reflecting film manufactured using the cholesteric liquid crystal layer enable the observer to confirm the reflected light visually.

Thus, it is common to manufacture an optical laminate to be used for a head-up display by laminating a plurality of films having various functions. However, the laminate hardly has uniform performance in the surface of the laminate, and it is difficult to achieve uniform performance in the surface.

WO 2020 / 067 338 A1 discloses an optical laminate suitable for a head-up display of the prior art.

US 2017 / 235030 A1 and JP 2005 / 091 900 A disclose other examples of optical laminate of the prior art.

### Document List

### Patent Literature

Patent Literature 1: Japanese Patent Application Publication No. H06-40271
Patent Literature 2: Japanese Patent No. 5973109

### Summary of Invention

### Technical Problem

An object of the present invention is to provide an optical laminate and functional glass for a head-up display which are excellent in performance uniformity in the surface, and a head-up display system using the optical laminate and the functional glass.

Solution to Problem

An optical laminate for a head-up display according to an embodiment of the present invention includes (A) at least one polyvinyl acetal resin layer having a photoelastic coefficient (PeA) in the range of the following Expression (1) and (B) at least one optical functional layer.
[Expression 1]

$$|PeA| \leq 4.0 \times 10^{-11}\ Pa^{-1} \ldots (1)$$

The optical laminate for a head-up display further includes (C) at least one polyvinyl acetal resin layer having a photoelastic coefficient (PeC) in the range of the following Expression (2), the optical functional layer is (B-1) a 1/2 wavelength plate or (B-5) a film having a P polarized light reflecting function or wherein the optical functional layer is (B-1) a 1/2 wavelength plate, (B-2) a 1/4 wavelength plate, (B-3) a laminate of a 1/2 wavelength plate and a circularly polarized light reflecting layer, or (B-4) a laminate of a 1/4 wavelength plate and a circularly polarized light reflecting layer.
[Expression 2]

$$5.0 \times 10^{-11}\ Pa^{-1} \leq PeC \leq 5.0 \times 10^{-9}\ Pa^{-1} \ldots (2)$$

In one embodiment of the present invention, the optical laminate for a head-up display has the two polyvinyl acetal resin layers different in the photoelastic coefficient (Pe), the ratio of a photoelastic coefficient of one of the polyvinyl acetal resin layers (Pe2) to a photoelastic coefficient of the other of the polyvinyl acetal resin layers (Pe1) (PeR) satisfies the following Expression (3), and Pe1 < Pe2.
[Expression 3]

$$10 \leq PeR \leq 1000 \ldots (3)$$

In one embodiment of the present invention, the polyvinyl acetal resin layer has a thickness of 10 μm or more and 800 μm or less.
In one embodiment of the present invention, the polyvinyl acetal resin layer is a polyvinyl butyral resin layer.
In one embodiment of the present invention, the 1/2 wavelength plate or the 1/4 wavelength plate includes a polymerizable liquid crystal layer as a layer having the action of converting a polarization axis.
Functional glass for a head-up display according to an embodiment of the present invention includes the optical laminate and (D) glass plates.
A head-up display system according to an embodiment of the present invention includes the optical laminate or the functional glass.
In one embodiment of the present invention, the head-up display system includes the functional glass, and an incidence angle at which light emitted from a display image projection unit comes into the functional glass is in the range of $\alpha$ - 10° to $\alpha$ + 10°, with a Brewster angle defined as $\alpha$.

Effects of Invention

According to the present invention, an optical laminate and functional glass which are excellent in performance uniformity in the surface and suitable for application to a head-up display, and a head-up display system using the optical laminate and the functional glass can be achieved.

Brief Description of Drawings

[Fig. 1] A side sectional view showing one embodiment of an optical laminate according to the present invention.
[Fig. 2] A side sectional view showing another embodiment of the optical laminate according to the present invention.
[Fig. 3] A side sectional view showing one embodiment of functional glass according to the present invention.
[Fig. 4] A schematic diagram showing one embodiment of a head-up display system according to the present invention.
[Fig. 5] A schematic diagram showing an outline of light emitted from a display image projection unit to the functional glass according to the present invention coming in near a Brewster angle.
[Fig. 6] A schematic diagram showing another embodiment of the head-up display system according to the present

invention.

Description of Embodiments

Hereinafter, embodiments according to the present invention will be described with reference to the drawings. The following embodiments merely illustrate some typical embodiments of the present invention, and various modifications can be added within the scope of the present invention. Hereinafter, an optical laminate for a head-up display and functional glass for a head-up display may be described merely as an optical laminate and functional glass with the expression "for head-up display" omitted. The terms "(meth)acryloyl" and "(meth)acrylate" mean "acryloyl" or "methacryloyl" and "acrylate" or "methacrylate", respectively. Furthermore, a "head-up display" may be expressed as an HUD.

<Optical laminate>

Fig. 1 shows one embodiment of an optical laminate according to the present invention. As shown in Fig. 1, an optical laminate 10 includes a polyvinyl acetal resin layer 101 having a photoelastic coefficient in a predetermined range and an optical functional layer 102. Since such an optical laminate 10 has less nonuniformity of polarized light transmittance in the surface of the optical laminate 10, for example, when the optical laminate 10 is applied to a windshield of a head-up display system, double image formation nonuniformity depending on the projection position can be suppressed. That is, since the optical laminate 10 according to the present embodiment is less dependent on the projection position, the optical laminate 10 is excellent in performance uniformity in the surface of the optical laminate 10. Therefore, when the optical laminate 10 according to the present embodiment is applied to the head-up display system, the double image formation can be suppressed in a wide range without depending on the projection position, and a viewer can use a head-up display system without stress.

[Polyvinyl acetal resin layer]

The optical laminate according to the present invention includes at least one polyvinyl acetal resin layer having a photoelastic coefficient (PeA) in the range of the following Expression (1) as a configuration (A). When the optical laminate according to the present embodiment is used for functional glass described below, the polyvinyl acetal resin layer functions as an intermediate film for laminated glass. When the optical laminate includes a plurality of polyvinyl acetal resin layers having photoelastic coefficients (PeA) different from each other, the materials of the polyvinyl acetal resin layers may be the same or different, and it is preferable that the materials be the same.
[Expression 4]

$$|PeA| \leq 4.0 \times 10^{-11}\ Pa^{-1} \ldots (1)$$

<As to composition of polyvinyl acetal resin layer>

The polyvinyl acetal resin layer contains at least one polyvinyl acetal resin. The polyvinyl acetal resin is a resin obtained by reacting an aldehyde to polyvinyl alcohol, and is, for example, a compound represented by the following formula (I).

[Formula 1]

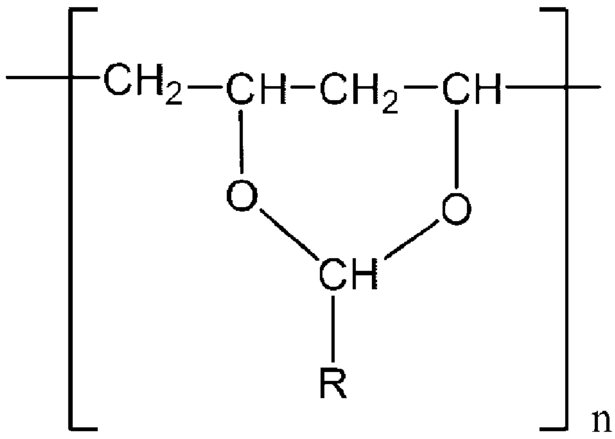

(I)

In formula (I), R represents a linear, branched, or annular C1 to C10 alkyl group, and is preferably a linear C1 to C6 alkyl group, further preferably a linear C1 to C4 alkyl group, and particularly preferably C1, namely a methyl group, (polyvinyl acetoacetal resin), or C4, namely an n-butyl group, (polyvinyl butyral resin), and the most preferably an n-butyl group. When R is an n-butyl group, the hue hardly changes especially before and after a durability test, and the practicality is high.

In the above-mentioned formula (I), n represents the number of repeating units, and is preferably 50 or more and 1500 or less. The upper limit of n is preferably 1000, further preferably 800, particularly preferably 600, and the most preferably 200. The lower limit of n is preferably 70, further preferably 100, particularly preferably 120, and the most preferably 150. That is, the most preferable n is 150 or more and 200 or less.

A preferable weight average molecular weight of the polyvinyl acetal resin is 6,000 or more and 1,000,000 or less. A preferable upper limit is 120,000, further preferably 96,000, particularly preferably 60,000, and the most preferably 20,000. A preferable lower limit is 8,500, further preferable 10,000, particularly preferably 12,000, and the most preferably 16,000. That is, the most preferable weight average molecular weight is 16,000 or more and 20,000 or less. The above-mentioned weight average molecular weights are values measured by gel permeation chromatography (GPC).

It is preferable that the polyvinyl acetal resin layer be a transparent polyvinyl acetal resin layer formed of a resin composition containing a polyvinyl acetal resin containing 14% by mol or less of a vinyl acetate component (residual acetyl group) obtained by acetalizing polyvinyl alcohol with an aldehyde having 3 to 4 carbon atoms, and a plasticizer. The resin composition for forming a polyvinyl acetal resin layer may further contain inorganic particulates, heat ray shielding particulates, a light shielding agent, various dyes and/or pigments, and the like if needed.

The plasticizer is not particularly limited, and a well-known plasticizer commonly used as a plasticizer for this type of intermediate films can be used. For example, triethylene glycol di-2-ethylbutyrate (3GH), triethylene glycol di-2-ethylhexanoate (3GO), triethylene glycol di-n-heptanoate (3G7), tetraethylene glycol di-2-ethylhexanoate (4GO), tetraethylene glycol di-n-heptanoate (4G7), oligoethylene glycol di-2-ethylhexanoate (NGO), and the like are suitably used. These plasticizers are commonly used in the range of 25 parts by mass or more and 70 parts by mass or less based on 100 parts by mass of polyvinyl acetal resin.

Examples of the above-mentioned inorganic particulates include calcium carbonate, alumina, kaolin clay, calcium silicate, magnesium oxide, magnesium hydroxide, aluminum hydroxide, magnesium carbonate, talc, feldspar powder, mica, barite, barium carbonate, titanium oxide, silica, and glass beads. These may be used singly or as a mixture. It is preferable that the average particle size of the inorganic particulates be 1 nm or more and 150 nm or less, it is further preferable that the average particle size be 5 nm or more and 120 nm or less, and it is particularly preferable that the average particle size be 10 nm or more and 100 nm or less. The average particle size can be measured with a light scattering measuring apparatus (for example, "DLS-6000AL" manufactured by Otsuka Electronics Co., Ltd.) using an Ar laser as a light source by dynamic light scattering. The inorganic particulates are used generally in the range of 1 part by mass or more and 200 parts by mass or less, preferably in the range of 5 parts by mass or more and 150 parts by mass or less, further preferably in the range of 10 parts by mass or more and 100 parts by mass or less based on 100 parts by mass of the polyvinyl acetal resin.

Examples of the heat ray shielding particulates include tin-doped indium oxide (ITO), antimony-doped tin oxide (ATO), aluminum-doped zinc oxide (AZO), indium-doped zinc oxide (IZO), tin-doped zinc oxide, silicon-doped zinc oxide, zinc antimonate, lanthanum hexaboride, cerium hexaboride, gold fine powder, silver fine powder, platinum fine powder, and aluminum fine powder.

Examples of the light shielding agent include carbon black and red iron oxide. Examples of the pigment include the black pigment carbon black, the red pigment (C. I. Pigment red), the blue pigment (C. I. Pigment blue), the yellow pigment (C. I. Pigment yellow), and a dark reddish brown mixed pigment formed by mixing these four. The amounts of the

heat ray shielding particulates, the light shielding agent, and the pigment added are suitably adjusted to such degrees that the transparency of the polyvinyl acetal resin layer is not deteriorated.

The polyvinyl acetal resin layer used for the present invention may further contain various additives such as an ultraviolet absorber, an antioxidant, and an adhesion adjuster used for this type of intermediate film optionally.

As the ultraviolet absorber, for example, 2-(2'-hydroxy-5'-methylphenyl)benzotriazole, 2-(2'-hydroxy-3',5'-di-t-methylphenyl)benzotriazole, 2-(2'-hydroxy-3'-t-butyl-5'-methylphenyl)-5-chlorobenzotriazole, 2-(2'-hydroxy-3',5'-di-amylphenyl)benzotriazole, and the like are preferable. Hindered amine-based light stabilizers are also preferable.

As the antioxidant, t-butylhydroxytoluene and tetrakis-[methylene-3-(3',5'-di-t-butyl-4'-hydroxyphenyl)propionate]methane, and the like are preferable. As the adhesion adjuster, alkali metal salts or alkaline-earth metal salts, of organic acids or inorganic acids, are preferable.

<As to photoelastic coefficient (Pe)>

The photoelastic coefficient is the proportional coefficient of a birefringence or phase difference occurring in proportion to stress, and has a constant value depending on the composition of the polyvinyl acetal resin layer. The unit of the photoelastic coefficient is $Pa^{-1}$. In the optical laminate according to the present embodiment, at least one polyvinyl acetal resin layer has a photoelastic coefficient (PeA) in the range of the above-mentioned Expression (1). When the photoelastic coefficient of the polyvinyl acetal resin layer (PeA) as the configuration (A) satisfies this condition, the nonuniformity of the polarized light transmittance in the surface of the optical laminate is reduced, and a double image can be prevented effectively. It is preferable that the polarized light transmittance be uniform in the surface, and furthermore, the case where the polyvinyl acetal resin layer has a low polarized light transmittance, and the polarized light transmittance is uniform in the surface is particularly preferable.

The above-mentioned Expression (1) means that the absolute value of the photoelastic coefficient (PeA) is $4.0 \times 10^{-11}$ ($Pa^{-1}$) or less, namely the photoelastic coefficient (PeA) is $-4.0 \times 10^{-11}$ ($Pa^{-1}$) or more and $4.0 \times 10^{-11}$ ($Pa^{-1}$) or less. The lower limit of the photoelastic coefficient (PeA) is $-4.0 \times 10^{-11}$ ($Pa^{-1}$), a more preferable value is $-3.0 \times 10^{-11}$ ($Pa^{-1}$), $-2.0 \times 10^{-11}$ ($Pa^{-1}$), $-1.0 \times 10^{-11}$ ($Pa^{-1}$), $-9.0 \times 10^{-12}$, $-6.0 \times 10^{-12}$ ($Pa^{-1}$), $-5.0 \times 10^{-12}$ ($Pa^{-1}$), $-2.0 \times 10^{-12}$ ($Pa^{-1}$), $-1.0 \times 10^{-12}$ ($Pa^{-1}$), 0, $1.0 \times 10^{-14}$ ($Pa^{-1}$), $5.0 \times 10^{-14}$ ($Pa^{-1}$), or $1.0 \times 10^{-13}$ sequentially, and is particularly preferably $5.0 \times 10^{-13}$ ($Pa^{-1}$). The upper limit of the photoelastic coefficient (PeA) is $4.0 \times 10^{-11}$ ($Pa^{-1}$), a more preferable value is $3.0 \times 10^{-11}$ ($Pa^{-1}$), $2.0 \times 10^{-11}$ ($Pa^{-1}$), $1.0 \times 10^{-11}$ ($Pa^{-1}$), $9.0 \times 10^{-12}$ $6.0 \times 10^{-12}$ ($Pa^{-1}$), $5.0 \times 10^{-12}$ ($Pa^{-1}$), or $2.0 \times 10^{-12}$ ($Pa^{-1}$) sequentially, and is particularly preferably $1.0 \times 10^{-12}$ ($Pa^{-1}$). Therefore, the most preferable range of the photoelastic coefficient (PeA) is $5.0 \times 10^{-13}$ ($Pa^{-1}$) or more and $1.0 \times 10^{-12}$ ($Pa^{-1}$) or less.

The optical laminate according to the invention, further include at least one polyvinyl acetal resin layer having a photoelastic coefficient (PeC) in the range of following Expression (2) as a configuration (C). The polyvinyl acetal resin layer in the configuration (C) may be made of the same material as or a different material from the polyvinyl acetal resin layer in the configuration (A), and it is preferable that the materials be the same material. When the optical laminate includes a plurality of polyvinyl acetal resin layers having photoelastic coefficients (PeC) different from each other, the materials of the polyvinyl acetal resin layers may be the same or different.

[Expression 5]

$$5.0 \times 10^{-11}\ Pa^{-1} \leq PeC \leq 5.0 \times 10^{-9}\ Pa^{-1} \ldots (2)$$

The lower limit of the photoelastic coefficient (PeC) is $5.0 \times 10^{-11}$ ($Pa^{-1}$), a more preferable value is $6.0 \times 10^{-11}$ ($Pa^{-1}$), $7.0 \times 10^{-11}$ ($Pa^{-1}$), $8.0 \times 10^{-11}$ ($Pa^{-1}$), $9.0 \times 10^{-11}$, or $1.0 \times 10^{-10}$ ($Pa^{-1}$) sequentially, and the lower limit is particularly preferably $1.5 \times 10^{-10}$ ($Pa^{-1}$). The upper limit of the photoelastic coefficient (PeC) is $5.0 \times 10^{-9}$ ($Pa^{-1}$), a more preferable value is $4.0 \times 10^{-9}$ ($Pa^{-1}$), $3.0 \times 10^{-9}$ ($Pa^{-1}$), $2.0 \times 10^{-9}$ ($Pa^{-1}$), $1.0 \times 10^{-9}$, or $8.0 \times 10^{-10}$ ($Pa^{-1}$) sequentially, and the upper limit is particularly preferably $5.0 \times 10^{-10}$ ($Pa^{-1}$). Therefore, the most preferable range of the photoelastic coefficient (PeC) is $1.5 \times 10^{-10}$ ($Pa^{-1}$) or more and $5.0 \times 10^{-10}$ ($Pa^{-1}$) or less.

Fig. 2 shows another embodiment of the optical laminate of the present invention, and an optical functional layer 102 is clamped with two polyvinyl acetal resin layers 101. In such an embodiment, one polyvinyl acetal resin layer may be the polyvinyl acetal resin layer as the configuration (A) and the other polyvinyl acetal resin layer may be the polyvinyl acetal resin layer as the configuration (C) in the optical laminate 10. When the optical laminate 10 has two polyvinyl acetal resin layers with different photoelastic coefficients (Pe), it is preferable that the ratio (PeR) of the photoelastic coefficient (Pe2) which one polyvinyl acetal resin layer has to the photoelastic coefficient (Pe1) which the other polyvinyl acetal resin layer has satisfy the following Expression (3). However, Pe1 < Pe2 in Expression (3).

[Expression 6]

$$10 \leq PeR \leq 1000 \ldots (3)$$

As long as the photoelastic coefficients which the two polyvinyl acetal resin layers have thus satisfy Expression (3) and the photoelastic coefficients are different from each other, the nonuniformity of the polarized light transmittance in the surface of the optical laminate is reduced, and a double image can be effectively prevented thereby. For example, one of the two polyvinyl acetal resin layers may be the polyvinyl acetal resin layer as the configuration (A), and the other may be the polyvinyl acetal resin layer as the configuration (C) so that each of the photoelastic coefficients satisfies Expression (3). In formula (3), the lower limit of the ratio between the photoelastic coefficients (PeR) is 10, more preferably 20, 30, 50, 70, 80, 100, 200, or 250 sequentially, and preferably particularly 280. The upper limit of the ratio between the photoelastic coefficients (PeR) is 1000, more preferably 900, 800, 700, 600, 500, 450, or 400 sequentially, and preferably particularly 350. Therefore, the most preferable range of the ratio between the photoelastic coefficients (PeR) is 280 or more and 350 or less.

<As to thickness of polyvinyl acetal resin layer>

It is preferable that the thickness of the polyvinyl acetal resin layer be 10 μm or more and 1,200 μm or less, and it is more preferable that the thickness be 10 μm or more and 800 μm or less. When the thickness of the polyvinyl acetal resin is in this range, the use of the optical laminate according to the present embodiment for functional glass enables imparting good shock resistance and penetration resistance to the functional glass. When the optical laminate has two or more polyvinyl acetal resin layers, the thicknesses of the polyvinyl acetal resin layers may be the same or different.

<Manufacturing method>

The polyvinyl acetal resin used for the present invention can be manufactured using a well-known method. For example, predetermined polyvinyl alcohol is dissolved in warm water, and the obtained aqueous solution is maintained at a predetermined temperature, for example, 0 to 95°C, and a necessary acid catalyst and a predetermined aldehyde are added. Then, acetalization reaction is advanced with stirring, and the reaction temperature is further raised to finish the reaction. Then, neutralization, water wash and drying are performed, and polyvinyl acetal resin powder can be produced.

(Disposition)

It is preferable that the polyvinyl acetal resin layers be disposed at the outermost layers of the optical laminate according to the present embodiment. The outermost layers mean layers contacting the glass plates when the optical laminate according to the present embodiment is disposed in the functional glass having (D) glass plates described below. When the polyvinyl acetal resin layers are disposed at the outermost layers of the optical laminate, the shock resistance and the penetration resistance to the functional glass are improved, and the scattering of the glass can be prevented.

(Method for forming polyvinyl acetal resin layer)

The polyvinyl acetal resin layer can be manufactured by a method in which a resin composition containing a polyvinyl acetal resin, a plasticizer, and various additives to be added if needed is kneaded using an extruder, a plastograph, a kneader, a Banbury mixer, a calender roll, or the like, and the kneaded material is subsequently subjected to a usual film forming method such as extrusion, calendering, and pressing, or film formation into a sheet shape. The polyvinyl acetal resin, the plasticizer and the various additives to be added if needed dissolved in a solvent such as the methyl ethyl ketone may be applied to a desired substrate and dried to form a film, or may be subjected to film forming directly on one surface or both surfaces of (B) the optical functional layer described below.

[Optical functional layer]

The optical laminate according to the present embodiment includes at least one optical functional layer as a configuration (B). The optical functional layer to be used for the present invention is a layer having the function of converting the polarization axis of the incident light and is selected from (B-1) a 1/2 wavelength plate, (B-2) a 1/4 wavelength plate, (B-3) a laminate of a 1/2 wavelength plate and a circularly polarized light reflecting layer,(B-4) a laminate of a 1/4 wavelength plate or (B-5) a film having a P polarized light reflecting function. For example, it is preferable that the circularly polarized light reflecting layer be a cholesteric liquid crystal layer using a cholesteric liquid crystal.

When an optical laminate according to the present embodiment is applied to a HUD use, it is particularly preferable to use (B-1) a 1/2 wavelength plate as an optical functional layer or to use (B-5) a film having P polarized light reflecting function, namely a film reflecting P polarized light selectively. Examples of the light reflecting layer reflecting P polarized light include a birefringent interference type polarizer including a polymer multilayer film including two or more polymers having different refractive indices, a polarizer having a fine uneven structure and called a wire grid type, and a

laminate of a 1/4 wavelength plate and a circularly polarized light reflecting layer, such as an optical laminated film in which a circularly polarized light reflecting film including a cholesteric liquid crystal layer is clamped with two 1/4 wavelength plates. In such an optical laminated film, P polarized light which comes in is converted into circularly polarized light with a 1/4 wavelength plate, and the circularly polarized light is reflected on a cholesteric liquid crystal layer and converted into P polarized light with the 1/4 wavelength plate again. That is, as the optical functional layer, a laminate in which (B-1) one or more 1/2 wavelength plates or (B-4) one or more circularly polarized reflecting layers are clamped with two 1/4 wavelength plates is preferable.

<1/2 wavelength plate>

When the 1/2 wavelength plate is used as the optical functional layer, the 1/2 wavelength plate is a phase difference element having the function of converting P polarized light into S polarized light, or converting S polarized light into P polarized light, namely converting a polarization axis. For example, such a 1/2 wavelength plate can be obtained by monoaxially stretching a film including a polycarbonate or cycloolefin polymer so that phase difference is 1/2 of a wavelength or by orienting a horizontally oriented polymerizable liquid crystal at a thickness such that the phase difference is 1/2 of a wavelength. The 1/2 wavelength plate using a horizontally oriented polymerizable liquid crystal generally includes a polymerizable liquid crystal layer as a layer having the action of converting a polarization axis and a supporting substrate to be coated with a coating liquid which forms the polymerizable liquid crystal layer. However, the supporting substrate is not an essential constituent member in the optical functional layer, and the polymerizable liquid crystal layer can also be transferred to another substrate (for example, the polyvinyl acetal resin layer, a glass plate) and used.

It is preferable that the upper limit value of the thickness of such a 1/2 wavelength plate be 10 μm or less, and it is more preferable that the upper limit value be 5 μm or less from the viewpoint of the orientation of the liquid crystal. Meanwhile, it is preferable that the lower limit value of the thickness of a 1/2 wavelength plate be 0.3 μm or more, and it is more preferable that the lower limit value be 0.5 μm or more from the viewpoint of the polymerizability of the liquid crystal. When light comes into the main surface of the 1/2 wavelength plate from an oblique position, the phase difference may change depending on the incidence angle of light. In such a case, to adapt the phase difference more strictly, change in the phase difference accompanied with the incidence angle can be suppressed, for example, by using a phase difference element in which the refractive index of the phase difference element is adjusted. For example, when the refractive index in the direction of a slow axis in the surface of the phase difference element is defined as nx, the refractive index in the direction at right angles to nx in the surface of the phase difference element is defined as ny, and the refractive index in the thickness direction of the phase difference element is defined as nz, the coefficient Nz represented by the following Expression (4) is controlled to preferably 0.3 or more and 1.0 or less, more preferably 0.5 or more and 0.8 or less.
[Expression 7]

$$Nz = (nx - nz)/(nx - ny) \qquad (4)$$

When the functional glass of the present invention described below is provided with an optical laminate having a 1/2 wavelength plate as an optical functional layer, and the functional glass is applied to a HUD system, in the HUD system, it is preferable that the angle θ which the slow axis of the 1/2 wavelength plate forms with the polarization axis of S polarized light or the polarization axis of P polarized light which comes in from an oblique position at 45° or more and 65° or less to the axis perpendicular to the surface of the functional glass be controlled to 35° or more and 47° or less to convert P polarized light into S polarized light or convert S polarized light into P polarized light efficiently. When P polarized light comes into the functional glass, the reflectance on the surface of the functional glass can be theoretically suppressed to 2% or less by adjusting the incidence angle of S polarized light or P polarized light which comes into the 1/2 wavelength plate to the range of 45° or more and 65° or less. Transmitted P polarized light is converted into S polarized light with the 1/2 wavelength plate, and the converted S polarized light is reflected on the interface between the functional glass on the side opposite to the incidence side and air. The reflected S polarized light is converted into P polarized light with the 1/2 wavelength plate again, and this P polarized light reaches an observer. Also when S polarized light comes into functional glass, the S polarized light is reflected on the surface of the functional glass, and this S polarized light reaches the observer. The transmitted S polarized light is converted into P polarized light with the 1/2 wavelength plate, the converted P polarized light is not reflected on the functional glass on the side opposite to the incidence side or the interface between the functional glass and air, and passes. Thus, the formation of a double image can be suppressed by controlling the incidence angle of S polarized light or P polarized light which comes into the functional glass. When the angle θ is less than 35° or more than 47°, the polarization axis conversion performance for converting P polarized light which comes into the functional glass into S polarized light or converting S polarized light which comes into the functional glass into P polarized light is low, and consequently the display image on the display may also be dark. The 1/2 wavelength plate exhibits good polarization axis conversion performance by controlling this angle θ appropriately, and the display image can be consequently visually

confirmed more clearly.

It is preferable that the angle θ be a value calculated from the following Expressions (5) and (6) to appropriately control the conversion performance of the polarization axis which the 1/2 wavelength plate exhibits. Here, the technical meaning of the following Expressions (5) and (6) will be described. When S polarized light or P polarized light which comes into the functional glass passes the 1/2 wavelength plate, which is a medium having a refractive index different from air, the incidence angle at which the S polarized light or the P polarized light comes into the 1/2 wavelength plate changes. Here, when the incidence angle which S polarized light or P polarized light forms with the functional glass is defined as α, the incidence angle at which the S polarized light or the P polarized light actually comes into the 1/2 wavelength plate, namely the refraction angle of the 1/2 wavelength plate is defined as β, the refractive index of air is defined as $n_\alpha$, and the refractive index of the 1/2 wavelength plate is defined as $n_\beta$, $\sin\alpha/\sin\beta = n_\beta/n_\alpha$ is valid according to Snell's law. When this expression is simplified to an equation in which β is found, Expression (6) is derived. Meanwhile, if a phase difference value, when the polarization axis of S polarized light which comes into the functional glass is defined as the x-axis, the polarization axis of P polarized light is the y-axis, and an angle which the y-axis and the slow axis of the 1/2 wavelength plate form is defined as θ, is Re, the y-axis is represented by $Re \cdot \cos\theta$, and the x-axis is represented by $Re \cdot \sin\theta$ using vector analysis. Here, since it is known that the polarization axis conversion performance of the 1/2 wavelength plate is maximum when light comes in at 45° to the slow axis of the 1/2 wavelength plate, it is desirable that the incidence angle to the slow axis of 1/2 wavelength plate be theoretically 45°. However, as mentioned above, even though the incidence angle of S polarized light or P polarized light which comes into the functional glass is defined as θ, the angle at which the S polarized light or the P polarized light comes into the 1/2 polarizing plate is actually β. Then, when, as to the y-axis (theoretical y-axis) which is $Re \cdot \cos\theta$, the y-axis inclined at an angle of β around the x-axis (actual y-axis) is found, $Re \cdot \cos\theta$/actual y-axis = sin (90° - β) is valid, and the actual y-axis is represented by $Re \cdot \cos\theta \cos\beta$. As described above, it is desirable that the incidence angle to the slow axis of the 1/2 wavelength plate be 45°. The x-axis ($Re \cdot \sin\theta$) needs to be equal to the actual y-axis ($Re \cdot \cos\theta \cos\beta$) to adjust an angle which the polarization axis of the S polarized light or the P polarized light which comes into the functional glass and the slow axis of the 1/2 wavelength plate form to 45°. Therefore, $Re \cdot \sin\theta = Re \cdot \cos\theta \cos\beta$ is found, and Expression (5) is derived by simplifying this expression. Thus, the polarization axis conversion performance which the 1/2 wavelength plate exhibits can be utilized to the utmost by controlling the angle θ strictly using the relationship with the angle β at which the S polarized light or the P polarized light actually comes into the 1/2 polarizing plate based on a value calculated from the following Expressions (5) and (6).

[Expression 8]

$$\tan\theta = \cos\beta \qquad (5)$$

$$\beta = \sin^{-1}\left(\sin\alpha \cdot \frac{n_\alpha}{n_\beta}\right) \qquad (6)$$

- $\theta$ : Angle which slow axis of 1/2 wavelength plate and polarization axis of S polarized light or P polarized light which comes in at any incidence angle of α to functional glass form
- $\alpha$ : Incidence angle of S polarized light or P polarized light to functional glass
- $n_\alpha$ : Refractive index of air
- $n_\beta$ : Refractive index of 1/2 wavelength plate

It is preferable that the range of the angle θ be controlled to the range of the value of the angle θ ± 5°, and it is more preferable that the range of the angle θ be controlled to the range of the value of the angle θ ± 3°. When the angle θ is out of the range of an angle which satisfies a value calculated from Expressions (5) and (6) ± 5°, the efficiency in converting the polarization axis from P polarized light to S polarized light which the 1/2 wavelength plate exhibits may decrease. A decrease in the efficiency in converting the polarization axis from P polarized light to S polarized light with the 1/2 wavelength plate can be suppressed by controlling the range of the angle θ based on the value calculated from the following expressions (5) and (6).

As the refractive index of the 1/2 wavelength plate substituted for expression (6), the refractive index in the direction of the slow axis of the 1/2 wavelength plate is defined as nx, the refractive index in the direction at right angles to nx in the plane of the 1/2 wavelength plate is defined as ny, the refractive index in the thickness direction of the 1/2 wavelength plate is defined as nz, and a value obtained by averaging these is used as an average refractive index. When a 1/2 wavelength plate which is a commercial item is used, a value listed on a catalog or the like can also be used as the average refractive index. When the polymerizable liquid crystal described below is used as a material of the 1/2 wavelength plate, the average refractive index is represented by (nx + ny + nz)/3 = (no + ne)/2 using the original ordinary refractive index no and the extraordinary refractive index ne. If specific examples of θ calculated from expression (5) and (6) are given, for example, when the refractive index of air is defined as 1.00, a 1/2 wavelength plate having a refractive index of 1.55 is used,

and the incidence angle of S polarized light or P polarized light is 45°, the value of θ is 42° based on expressions (5) and (6). Therefore, the range of θ is preferably 37° or more and 47° or less, and more preferably 39° or more and 45° or less. When the incidence angle of S polarized light or P polarized light is 50°, the value of θ is 41° based on expressions (5) and (6). Therefore, it is preferable that the range of θ be 36° or more and 46° or less, and it is more preferable that the range be 38° or more and 44° or less. When the incidence angle of S polarized light or P polarized light is 56°, the value of θ is 40° based on expressions (5) and (6). Therefore, it is preferable that the range of θ be 35° or more and 45° or less, and it is preferable that the range be 37° or more and 43° or less. Furthermore, when the incidence angle of S polarized light or P polarized light is 65°, the value of θ is 39° based on Expressions (5) and (6). Therefore, it is preferable that the range of θ be 34° or more and 44° or less, and it is more preferable that the range be 36° or more and 42° or less. The 1/2 wavelength plate exhibits good polarization axis conversion performance by controlling an angle which the polarization axis of S polarized light or P polarized light which comes in from an oblique position at 45° or more and 65° or less to the axis perpendicular to the surface of the functional glass and the slow axis of the 1/2 wavelength plate form to 35° or more and 47° or less. Consequently, a HUD system in which a display image can be visually confirmed more clearly can be provided.

As mentioned above, in the present invention, the polarization axis conversion performance which the 1/2 wavelength plate exhibits can be further enhanced by controlling the angle θ which the polarization axis of P polarized light or S polarized light which comes into the functional glass and the slow axis of the 1/2 wavelength plate form. In such a case, it is particularly preferable to use a 1/2 wavelength plate including a polymerizable liquid crystal layer as a layer having the action of converting a polarization axis from the viewpoints of the controllability of the slow axis of the 1/2 wavelength plate and manufacturing cost.

The polymerizable liquid crystal is a nematic liquid crystal monomer which has polymerizable groups in a molecule, and exhibits liquid crystallinity in a predetermined temperature range or a predetermined concentration range. Examples of the polymerizable groups include a (meth)acryloyl group, a vinyl group, a chalconyl group, a cinnamoyl group, and an epoxy group. In order that the polymerizable liquid crystal exhibits liquid crystallinity, it is preferable that a mesogen group exists in a molecule. The mesogen group means a rod-like or plate-like substituent such as a biphenyl group, a terphenyl group, a (poly)phenyl benzoate ester group, a (poly)ether group, a benzylideneaniline group, or an acenaphthoquinoxaline group; or a disk-like substituent such as a triphenylene group, a phthalocyanine group, or an azacrown group, namely a group having the capability to induce liquid crystal phase behavior. A liquid crystal compound having a rod-like or plate-like substituent is known as a calamitic liquid crystal in the technical field. Examples of the nematic liquid crystal monomer having such polymerizable groups include polymerizable liquid crystals described in Japanese Patent Application Publication No. 2003-315556, Japanese Patent Application Publication No. 2004-29824, and the like; and polymerizable liquid crystals such as the PALIOCOLOR series (produced by BASF SE) and the RMM series (produced by Merck KGaA). The nematic liquid crystal monomers having these polymerizable groups may be used singly or as a mixture of two or more.

A polymerizable compound which can react with a nematic liquid crystal monomer having polymerizable groups and does not have liquid crystallinity can also be added. Examples of such a compound include ultraviolet curable resins. Examples of the ultraviolet curable resins include dipentaerythritol hexa(meth)acrylate, the reaction product of dipentaerythritol penta(meth)acrylate and 1,6-hexamethylene diisocyanate, a reaction product of a triisocyanate having an isocyanuric ring and pentaerythritol tri(meth)acrylate, the reaction product of pentaerythritol tri(meth)acrylate and isophorone diisocyanate, dipentaerythritol penta(meth)acrylate, dipentaerythritol tetra(meth)acrylate, pentaerythritol tetra(meth)acrylate, pentaerythritol tri(meth)acrylate, trimethylolpropane tri(meth)acrylate, ditrimethylolpropane tetra(meth)acrylate, tris(acryloxyethyl) isocyanurate, tris(methacryloxyethyl) isocyanurate, the reaction product of glycerol triglycidyl ether and (meth)acrylic acid, caprolactone-modified tris(acryloxyethyl) isocyanurate, the reaction product of trimethylolpropane triglycidyl ether and (meth)acrylic acid, triglycerol di(meth)acrylate, the reaction product of propylene glycol diglycidyl ether and (meth)acrylic acid, polypropylene glycol di(meth)acrylate, tripropylene glycol di(meth)acrylate, polyethylene glycol di(meth)acrylate, tetraethylene glycol di(meth)acrylate, triethylene glycol di(meth)acrylate, pentaerythritol di(meth)acrylate, the reaction product of 1,6-hexanediol diglycidyl ether and (meth)acrylic acid, 1,6-hexanediol di(meth)acrylate, glycerol di(meth)acrylate, the reaction product of ethylene glycol diglycidyl ether and (meth)acrylic acid, the reaction product of diethylene glycol diglycidyl ether and (meth)acrylic acid, bis(acryloxyethyl)hydroxyethyl isocyanurate, bis(methacryloxyethyl)hydroxyethyl isocyanurate, the reaction product of bisphenol A diglycidyl ether and (meth) acrylic acid, tetrahydrofurfuryl (meth)acrylate, caprolactone-modified tetrahydrofurfuryl (meth)acrylate, 2-hydroxyethyl (meth)acrylate, 2-hydroxypropyl (meth)acrylate, polypropylene glycol (meth)acrylate, polyethylene glycol (meth)acrylate, phenoxyhydroxypropyl (meth)acrylate, acryloylmorpholine, methoxypolyethylene glycol (meth)acrylate, methoxytetraethylene glycol (meth)acrylate, methoxytriethylene glycol (meth)acrylate, methoxyethylene glycol (meth)acrylate, methoxyethyl (meth)acrylate, glycidyl (meth)acrylate, glycerol (meth)acrylate, ethylcarbitol (meth)acrylate, 2-ethoxyethyl (meth)acrylate, N,N-dimethylaminoethyl (meth)acrylate, 2-cyanoethyl (meth)acrylate, the reaction product of butyl glycidyl ether and (meth)acrylic acid, butoxytriethylene glycol (meth)acrylate, and butanediol mono(meth)acrylate. These may be used singly or as a mixture of two or more. These ultraviolet curable resins not having liquid crystallinity have to be added to such an extent that the liquid crystal composition containing a nematic liquid crystal monomer does not lose liquid

crystallinity, and the content of the ultraviolet curable resin is preferably 0.1 to 20 parts by mass, and more preferably 1.0 to 10 parts by mass based on 100 parts by mass of the nematic liquid crystal monomer having polymerizable groups.

When the nematic liquid crystal monomer having the above-mentioned polymerizable group and the polymerizable compound not having liquid crystallinity are ultraviolet curable, a photopolymerization initiator is added to cure a liquid crystal composition containing these by ultraviolet rays. Examples of the photopolymerization initiator include acetophenone-based compounds such as 2-methyl 1-[4-(methylthio)phenyl]-2-morpholinopropane-1 (Irgacure 907 produced by BASF SE), 1-hydroxycyclohexyl phenyl ketone (Irgacure 184 produced by BASF SE), 4-(2-hydroxyethoxy)-phenyl(2-hydroxy-2-propyl)ketone (Irgacure 2959 produced by BASF SE), 1-(4-dodecylphenyl)-2-hydroxy-2-methylpropan-1-one (Darocur 953 produced by Merck KGaA), 1-(4-isopropylphenyl)-2-hydroxy-2-methylpropan-1-one (Darocur 1116 produced by Merck KGaA), 2-hydroxy-2-methyl-1-phenylpropan-1-one (Irgacure 1173 by BASF SE), and diethoxyacetophenone; benzoin-based compounds such as benzoin, benzoin methyl ether, benzoin ethyl ether, benzoin isopropyl ether, benzoin isobutyl ether, and 2,2-dimethoxy-2-phenylacetophenone (Irgacure 651 produced by BASF SE); benzophenone-based compounds such as benzoylbenzoic acid, methyl benzoylbenzoate, 4-phenylbenzophenone, hydroxybenzophenone, 4-benzoyl 4'-methyldiphenyl sulfide, and 3,3'-dimethyl-4-methoxybenzophenone (Kayacure MBP produced by Nippon Kayaku Co., Ltd.); and thioxanthone-based compounds such as thioxanthone, 2-chlorothioxanthone (Kayacure CTX produced by Nippon Kayaku Co., Ltd.), 2-methylthioxanthone, 2, 4-dimethylthioxanthone (Kayacure RTX produced by Nippon Kayaku Co., Ltd.), isopropylthioxanthone, 2,4-dichlorothioxanthone (Kayacure CTX produced by Nippon Kayaku Co., Ltd.), 2,4-diethylthioxanthone (Kayacure DETX produced by Nippon Kayaku Co., Ltd.), and 2,4-diisopropylthioxanthone (Kayacure DITX produced by Nippon Kayaku Co., Ltd.). Examples of a preferable photopolymerization initiator include Irgacure TPO, Irgacure TPO-L, Irgacure OXE01, Irgacure OXE02, Irgacure 1300, Irgacure 184, Irgacure 369, Irgacure 379, Irgacure 819, Irgacure 127, Irgacure 907, and Irgacure 1173 (all are produced by BASF SE), and particularly preferable examples include Irgacure TPO, Irgacure TPO-L, Irgacure OXE01, Irgacure OXE02, Irgacure 1300, and Irgacure 907. These photopolymerization initiators can be used singly or as a mixture obtained by mixing two or more at any ratio.

When the benzophenone-based compound, the thioxanthone-based compound is used as the photopolymerization initiator, an auxiliary agent can also be used in combination to promote photopolymerization reaction. Example of such an auxiliary agent include amine-based compounds such as triethanolamine, methyldiethanolamine, triisopropanolamine, n-butylamine, N-methyldiethanolamine, diethylaminoethyl methacrylate, Michler's ketone, 4,4'-diethylaminophenone, ethyl 4-dimethylaminobenzoate, (n-butoxy)ethyl 4-dimethylaminobenzoate, and isoamyl 4-dimethylaminobenzoate.

It is preferable that the amounts of the above-mentioned photopolymerization initiator and auxiliary agent added be such that the amounts thereof used do not affect the liquid crystallinity of the liquid crystal composition. The amounts thereof are preferably 0.5 parts by mass or more and 10 parts by mass or less, and more preferably 2 parts by mass or more and 8 parts by mass or less based on 100 parts by mass of the compound cured by ultraviolet rays in the liquid crystal composition. It is preferable that the amount of the auxiliary agent be 0.5 times or more and 2 times or less as many as the amount of the photopolymerization initiator.

It is preferable that at least one compound selected from the group consisting of a compound represented by the following formula (II), a compound represented by the following formula (III), and a compound represented by the following formula (IV) (hereinafter also referred to as merely an "additive compound") be added with the above-mentioned liquid crystalline compound. The heat resistance of the 1/2 wavelength plate can further be improved, and a change in the phase difference value of the 1/2 wavelength plate can be further reduced in a high temperature atmosphere thereby.

[Formula 2]

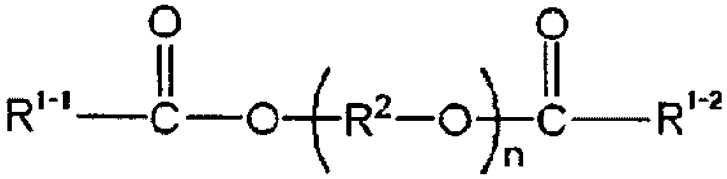 (II)

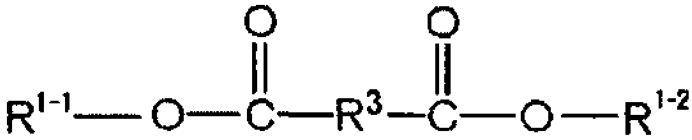 (III)

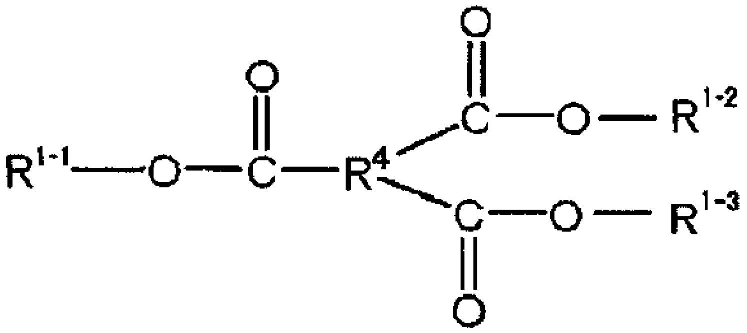 (IV)

In formula (II) to formula (IV), $R^{1-1}$, $R^{1-2}$, and $R^{1-3}$ each independently represent an alkyl group having a branched structure with 5 or more carbon atoms. When $R^{1-1}$, $R^{1-2}$, and $R^{1-3}$ are each independently an alkyl group having a branched structure, a change in the phase difference value of the 1/2 wavelength plate in a high temperature atmosphere particularly decreases. It is preferable that the carbon number be 6 or more and 18 or less. It is more preferable that $R^{1-1}$, $R^{12}$, and $R^{1-3}$ be each independently a $CH_3-(CH_2)_m-CHRX$-group. Here, it is further preferable that RX represent an alkyl group having 1 to 5 carbon atoms, and $R^{1-1}$, $R^{1-2}$, and $R^{1-3}$ be each independently a $CH_3-(CH_2)_m-CH(C_2H_5)$- group, and it is particularly preferable that $R^{1-1}$, $R^{1-2}$, and $R^{1-3}$ be each independently a 2-ethylhexyl group or a 2-ethylbutyl group. Here, m represents an integer in the range of 1 to 6. In formula (III), $R^3$ represents a - $(CH_2)_p$- group or a phenylene group, and p represents an integer of 4 to 8. When $R^3$ is a phenylene group, the phenylene group may have a substituent at any of an ortho position, a meta position, and a para position, and it is preferable that the phenylene group have a substituent at an ortho position. In formula (IV), $R^4$ represents a substituted phenylene group. Although the substituted phenylene group may have a substituent at any of an ortho position, a meta position, and a para position, it is preferable that the substituted phenylene group have substituents at an ortho position and a para position. In formula (II), $R^2$ represents a $-CH_2-CH_2-$ group, a $-CH_2-CH(CH_3)$-group, or a $-CH_2-CH_2-CH_2-$ group, and the $-CH_2-CH_2-$ group is preferable.

Examples of the compound represented by formula (II) include triethylene glycol di-2-ethylhexanoate (3GO), tetraethylene glycol di-2-ethylhexanoate (4GO), triethylene glycol di-2-ethylbutyrate (3GH), tetraethylene glycol di-2-ethylbutyrate, pentaethylene glycol di-2-ethylhexanoate, octaethylene glycol di-2-ethylhexanoate, nonaethylene glycol di-2-ethylhexanoate, and decaethylene glycol di-2-ethylhexanoate.

Examples of the compound represented by formula (III) include bis(2-ethylhexyl) adipate, bis(2-ethylbutyl) adipate, bis(2-ethylhexyl) azelate, bis(2-ethylbutyl) azelate, di-2-ethylhexyl sebacate, di-2-ethylbutyl sebacate, and di-2-ethylhexyl phthalate, and di-2-ethylbutyl phthalate.

Examples of the compound represented by formula (IV) include tri-2-ethylhexyl trimellitate and tri-2-ethylbutyl trimellitate.

The compound represented by formula (II), the compound represented by formula (III), and the compound represented by formula (IV) may be used singly or in combination of two or more. It is preferable that, among these, the compound represented by formula (II) be used because the compound is excellent in compatibility with the above-mentioned liquid crystalline compound and a stable phase difference element can be obtained. Among the compounds represented by a formula (II), triethylene glycol di-2-ethylhexanoate (3GO), tetraethylene glycol di-2-ethylhexanoate (4GO) and triethylene glycol di-2-ethylbutyrate (3GH) are more preferable, and triethylene glycol di-2-ethylhexanoate (3GO) is further preferable due to excellent compatibility with the liquid crystalline compound and an excellent effect of suppressing a change in the phase difference value of the 1/2 wavelength plate in a high temperature atmosphere.

Although the content of at least one additive compound selected from the group consisting of the compound

represented by formula (II), the compound represented by a formula (III) and the compound represented by formula (IV) is not particularly limited, it is preferable that the content be 0.1 parts by mass or more and 300 parts by mass or less, it is more preferable that the content be 0.5 parts by mass or more and 50 parts by mass or less, it is further preferable that the content be 0.8 parts by mass or more and 30 parts by mass or less, and it is particularly preferable that the content be 1 part by mass or more and 15 parts by mass or less, based on 100 parts by mass of the above-mentioned liquid crystalline compound. When the content of the above-mentioned additive compound is less than 0.1 parts by mass, the effect of suppressing a change in the phase difference value of the 1/2 wavelength plate in a high temperature atmosphere may not be obtained. Meanwhile, even though the content of the above-mentioned additive compound is more than 300 parts by mass, the effect of suppressing a change in the phase difference value of the 1/2 wavelength plate in a high temperature atmosphere does not change, and it is preferable that the upper limit value of the content of the above-mentioned additive compound be therefore 300 parts by mass or less from the viewpoint of material cost.

<1/4 wavelength plate>

(B-2) A 1/4 wavelength plate can also be used as an optical functional layer depending on the design of a HUD system. The 1/4 wavelength plate is a phase difference element having the function of converting circularly polarized light into linear polarized light, and, for example, can be obtained by monoaxially stretching a film including a polycarbonate or cycloolefin polymer so that the phase difference is 1/4 of a wavelength or by orienting a horizontally oriented polymerizable liquid crystal at a thickness such that the phase difference is 1/4 of a wavelength. It is preferable that the 1/4 wavelength plate also include the above-mentioned polymerizable liquid crystal layer. In such a case, the 1/4 wavelength plate includes the above-mentioned polymerizable liquid crystal layer as a layer having the action of converting a polarization axis and a supporting substrate to be coated with a coating liquid for forming the polymerizable liquid crystal layer. However, the supporting substrate is not an essential constituent member in the optical functional layer, and the polymerizable liquid crystal layer can be transferred to another substrate (for example, the polyvinyl acetal resin layer, a glass plate) and used.

When the deviation of the phase difference due to wavelength dispersion is large as the 1/4 wavelength plate, a phase difference element called a broadband 1 / 4 wavelength plate may be used. The broadband 1/4 wavelength plate is a phase difference element in which the wavelength dependence of the phase difference is reduced. Examples include a phase difference element in which a 1/2 wavelength plate and a 1/4 wavelength plate having the same wavelength dispersion are laminated so that an angle which the respective slow axes form is 60° and a polycarbonate-based phase difference element in which the wavelength dependence of the phase difference is reduced (manufactured by TEIJIN LIMITED: PURE-ACE WR-S). Moreover, when light comes in at an oblique incidence angle to the 1/4 wavelength plate like a HUD, the phase difference may change with the incidence angle of light depending on the phase difference element. In such a case, as a method for matching the phase difference more strictly, for example, a change in the phase difference with the incidence angle can be suppressed by using a phase difference element in which the refractive index of the phase difference element is adjusted. As such an example, when the refractive index in the direction of the slow axis in the plane of the phase difference element is defined as nx, the refractive index in the direction perpendicular to nx in the plane of the phase difference element is defined as ny, and the refractive index in the thickness direction of the phase difference element is defined as nz, the coefficient Nz, which is represented by the above-mentioned expression (4), is controlled to preferably 0.3 to 1.0, more preferably 0.5 to 0.8.

When the functional glass of the present invention described below is provided with an optical functional layer including a 1/4 wavelength plate, and the functional glass is applied to the HUD system, it is preferable that the optical functional layer be (B-4) a laminate of the 1/4 wavelength plate and a circularly polarized light reflecting layer. Specifically, it is preferable that the optical functional layer include the circularly polarized light reflecting layer, a first 1/4 wavelength plate laminated onto one surface of the circularly polarized light reflecting layer, and a second 1/4 wavelength plate laminated onto the other surface of the circularly polarized light reflecting layer. As the circularly polarized light reflecting layer, a light reflecting layer using a cholesteric liquid crystal is suitably used. In the case of such a configuration, in the HUD system, among the two 1/4 wavelength plates, the first 1/4 wavelength plate is provided on the side from which S polarized light or P polarized light comes in, and the second 1/4 wavelength plate is provided on the side from which the circularly polarized light transmitted through the circularly polarized light reflecting layer comes in. For example, when the circularly polarized light reflecting layer has a right circularly polarized light reflecting function, the incidence of P polarized light into the first 1/4 wavelength plate leads to the transmission of the P polarized light through the first 1/4 wavelength plate almost without reflecting the P polarized light on the interface of the first 1/4 wavelength plate. The transmitted P polarized light is converted into right circularly polarized light with the first 1/4 wavelength plate, and some of this right circularly polarized light is reflected on the circularly polarized light reflecting layer by the right circularly polarized light conversion performance of the circularly polarized light reflecting layer. The reflected right circularly polarized light is converted into the original P polarized light with the first 1/4 wavelength plate again, and this P polarized light reaches the observer. Although the right circularly polarized light which is transmitted through the circularly polarized light reflecting layer without

being reflected on the circularly polarized light reflecting layer returns to the original P polarized light with the second 1/4 wavelength plate, this P polarized light is transmitted almost without being reflected on the outer interface of the second 1/4 wavelength plate. Meanwhile, also when S polarized light comes into the first 1/4 wavelength plate, the S polarized light is reflected on the surface of the first 1/4 wavelength plate, and this S polarized light reaches the observer. The S polarized light which is transmitted through the first 1/4 wavelength plate without being reflected on the first 1/4 wavelength plate is converted into left circularly polarized light with the first 1/4 wavelength plate. Although this left circularly polarized light is transmitted through the circularly polarized light reflecting layer without being reflected on the circularly polarized light reflecting layer having a right circularly polarized light reflecting function, and returns to the original S polarized light with the second 1/4 wavelength plate, this S polarized light is transmitted almost without being reflected on the outer interface of the second 1/4 wavelength plate. When the circularly polarized light reflecting layer has a left circularly polarized light reflecting function, P polarized light or S polarized light reaches the observer in the same principle.

It is preferable that the upper limit value of the thickness of the 1/4 wavelength plate be 10 μm or less, and it is more preferable that the upper limit value be 5 μm or less from the viewpoint of the orientation of the liquid crystal. Meanwhile, it is preferable that the lower limit value of the thickness of the 1/4 wavelength plate be 0.3 μm or more, and it is more preferable that the lower limit value be 0.5 μm or more. It is preferable that the upper limit value of the thickness of the circularly polarized light reflecting layer be 10 μm or less, and it is more preferable that the upper limit value be 5 μm or less from the viewpoint of the orientation of the liquid crystal. Meanwhile, it is preferable that the lower limit value of the thickness of the circularly polarized light reflecting layer be 0.3 μm or more, and it is more preferable that the lower limit value be 0.5 μm or more from the viewpoint of the polymerizability of the liquid crystal.

When (B) the optical functional layer includes the polymerizable liquid crystal layer, the liquid crystal composition forming the polymerizable liquid crystal layer may be applied to the supporting substrate. It is preferable that such a supporting substrate be transparent in a visible light region to maintain the visibility of a display image. The visible light transmittance at a wavelength of 380 nm or more and 780 nm or less may be specifically 50% or more, it is preferable that the visible light transmittance be 70% or more, and it is more preferable that the visible light transmittance be 85% or more. Although the supporting substrate may be colored, it is preferable that the supporting substrate be not or hardly colored. Moreover, it is preferable that the refractive index of the supporting substrate be 1.2 or more and 2.0 or less, and it is more preferable that the refractive index be 1.4 or more to 1.8 or less. The thickness of the supporting substrate may be suitably selected depending on the use, is preferably 5 μm or more and 1000 μm or less, more preferably 10 μm or more and 250 μm or less, and is particularly preferably 15 μm or more and 150 μm or less.

The supporting substrate may be a monolayer, or may be a laminate having two layers or more. Example of the material of the supporting substrate include triacetylcellulose (TAC), acryl, polycarbonate, polyvinyl chloride, polyolefin, and polyethylene terephthalate (PET). Among these, triacetylcellulose (TAC), polyolefin, acryl, and the like, which have little birefringence, are preferable.

It is particularly preferable that, in the optical laminate according to the present invention, two or more (B) optical functional layers be included. In such a case, although nothing may be used between the optical functional layers, namely, the optical functional layers may be laminated directly, an adhesive layer or a pressure sensitive adhesive layer may be used between the optical functional layers. Although examples of the pressure sensitive adhesive include an acrylic or rubber-based adhesive, the acrylic pressure sensitive adhesive, in which the adhesiveness, the holding power, and the like are easily adjusted, is preferable. Examples of the adhesive include ultraviolet curable resin compositions and mixtures thereof. In the case of an ultraviolet curable resin composition, the optical functional layers can be adhered by irradiating ultraviolet rays and curing the composition in which a plurality of monomers having acryloyl groups or epoxy groups is mixed in the presence of a photopolymerization initiator. The optical functional layers can be adhered by heating and curing a composition including a plurality of monomers or polymers having amino groups, carboxyl groups, and hydroxyl groups in the presence of a compound having isocyanate groups or melamine.

<Method for manufacturing optical functional layer>

Thereafter, methods for manufacturing optical functional layers using nematic liquid crystal monomers having the above-mentioned polymerizable groups will be described. As such a method, for example, a nematic liquid crystal monomer having polymerizable groups is dissolved in a solvent, and subsequently the photopolymerization initiator is added. As long as the liquid crystal monomer to be used can be dissolved in such a solvent, such a solvent is not particularly limited. The examples include cyclopentanone, toluene, methyl ethyl ketone, methyl isobutyl ketone, cyclopentanone, toluene, and the like are preferable. Then, this solution is applied to a plastic substrate such as a PET film or a TAC film used as a supporting substrate so that the thickness is as uniform as possible, the solution is left to stand for a certain period of time under temperature conditions under which the solution becomes a liquid crystal, and is oriented on the supporting substrate while the solvent is removed by heating. At this time, the orientation of the liquid crystal can be more uniform by performing rubbing treatment in a desired direction before the coating of the plastic substrate surface or by performing the orientation treatment of forming a photo-oriented material, which exhibits photo-orientation by polarized light irradiation,

into a film on the plastic substrate surface, irradiating polarized light, and the like. The slow axes of the optical functional layers can be controlled to desired angles, and the haze values of the optical functional layers can be reduced thereby. Subsequently, the optical functional layer having a desired slow axis can be obtained by irradiating the nematic liquid crystal monomer with ultraviolet rays using a high-pressure mercury lamp, or the like while this orientation state is maintained, and fixing the orientation of the liquid crystal.

<Functional glass>

The functional glass according to the present invention includes the above-mentioned optical laminate and (D) a glass plate. Although the glass plate may be one or more, functional glass having a structure in which the optical laminate is clamped with two glass plates is preferable. Such functional glass is suitably used as a display medium in the HUD system.

When the optical laminate is bonded onto the glass plate. For example, the optical laminate can also be bonded onto the glass plate or the glass plates by applying a pressure sensitive adhesive or an adhesive to one side or both sides of the optical laminate and subsequently bonding the glass plate or the glass plates. Although the pressure sensitive adhesive or the adhesive is not particularly limited, when the removal may be performed later, a material which is excellent in reworkability, and has good adhesiveness, for example, a silicone pressure sensitive adhesive, an acrylic pressure sensitive adhesive, or the like, is preferable. Since the functional glass according to the present invention has the polyvinyl acetal resin layer, the functional glass is excellent in shock resistance.

<(D) Glass plate>

For example, even though the functional glass according to the present invention is used as a windshield, the glass plate is not particularly limited in the case where the functional glass has transparency wherein the scene ahead can be fully confirmed visually. It is preferable that the refractive index of the glass plate be 1.2 or more and 2.0 or less, and it is more preferable that the refractive index be 1.4 or more and 1.8 or less. As long as the thickness, shape, and the like of the glass plate do not affect the reflection of display light in the case where the functional glass is applied to the HUD system, they are not particularly limited and can be suitably designed. A reflection increasing film including a multilayer film and a metal thin film layer also having a heat shielding function may be provided on the reflective surface on the glass plate. These films can improve the reflectance of incident polarized light. When the functional glass of the present invention is used as a windshield for cars, it is preferable to adjust the reflectance so that the visible light transmittance of the functional glass is 70% or more.

When the optical laminate of the present invention is used, functional glass in which an optical laminate is disposed between two glass plates can be obtained by disposing the optical laminate between two glass plates for press-fitting at high temperature and high pressure. Fig. 3 shows one embodiment of the functional glass according to the present invention. In functional glass 20 shown in Fig. 3, an optical laminate 10 is clamped with two glass plates 201, and for example, the optical laminate 10 corresponds to the optical laminate in Fig. 1 or Fig. 2. As shown in Fig. 3, when the optical laminate 10 is included in the functional glass 20, the polyvinyl acetal resin layer 101 which the optical laminate 10 has also has a function as a pressure sensitive adhesive or an adhesive for maintaining the adhesion between the glass plates 201 and the optical laminate 10.

An example of the method of manufacturing functional glass using the optical laminate of the present invention will be described specifically. First, two glass plates are provided. When the functional glass is used as laminated glass for a windshield for a car, it is preferable that soda-lime glass made by the floating method be used. The glass may be either of transparent glass or green-colored glass, and is not particularly limited. As to the thickness of these glass plates, around 2 mmt is usually employed; however, glass plates having a thickness a little thinner than this can also be used in response to requests for the weight reduction of glass in recent years. Glass plates are cut out in a predetermined shape, and the glass edges are chamfered off and washed. When a black print in a frame shape, a dot shape is required, this is printed on the glass plates. When a curved surface shape like a windshield is needed, the glass plates are heated at 650°C or more and then faired by pressing with a mold, bending by self weight, or the like so that the two glass plates may be in the same surface shape, and the glass is cooled. When the cooling rate is too high at this time, stress distribution occurs in the glass plates, the glass plates become tempered glass, and the glass plates are therefore slowly cooled. One of the thus manufactured glass plates is placed horizontally, and an optical laminate according to the present invention is laid thereon, and the other glass plate is further placed. Subsequently, the optical functional layer, the polyvinyl acetal resin, and the like protruded from the edges of the glass are cut and removed with a cutter. Then, heating is performed at a temperature of 80°C to 100°C while air existing between the glass and the optical laminate laminated in the shape of a sandwich is deaerated, and preliminary adhesion is performed. As methods for deaerating air, there are two types of the bag method, which are performed by wrapping the laminate of glass plate/ optical laminate/ glass plate in a rubber bag made of heat-resistant rubber or the like, and the ring method, in which sealing is performed by covering only the end portion of the glass plate with a rubber ring, and either may be used. After the completion of the preliminary adhesion, the laminate of glass

plate/ optical laminate/ glass plate taken out of the rubber bag or the laminate from which the rubber ring is removed is placed in an autoclave, heated to 120°C to 150°C under a high pressure of 10 to 15 kg/cm$^2$, and subjected to heating and pressurization treatment for 20 minutes to 40 minutes under these conditions. After the treatment, the laminate is cooled to 50°C or less and then decompressed. Functional glass of the present invention which is a laminate of glass plate/ optical laminate/ glass plate is taken out of the autoclave.

The thus manufactured functional glass can be used as windshields, side glasses, rear glasses, and roof glasses for standard-sized cars, small cars, light cars, a large-sized special cars, small special cars, and the like. Moreover, the functional glass can be used as windows for railcars, vessels, airplanes and as window materials for building materials and industrial uses. As a form of use, the functional glass can be used with the functional glass laminated onto or bonded onto members having a UV-blocking or a light control function.

[Head-up display system]

Fig. 4 shows a schematic diagram of one embodiment of the HUD system according to the present invention. The HUD system shown in Fig. 4 includes a display image projection unit (display) 2 which converts display light that shows a display image into S polarized light or P polarized light and emits the S polarized light or the P polarized light, a reflecting mirror 3 which reflects the display light emitted from the display image projection unit 2, and functional glass for a head-up display according to the present invention (functional glass) 4 in which the S polarized light or the P polarized light emitted from the display image projection unit 2 comes. The S polarized light or the P polarized light reaches an observer 1 through an optical path 5 by reflecting the S polarized light or the P polarized light emitted from the display image projection unit 2 on the reflecting mirror 3 and irradiating the functional glass 4 which functions as a windshield with this reflected display light, and a virtual image 6 of a display image can be visually confirmed. Although, in the HUD system shown in Fig. 4, the display light emitted from the display image projection unit 2 comes into the functional glass 4 through the reflecting mirror 3, the display light may come into the windshield directly from the display image projection unit 2. The polarized light emitted from the display image projection unit 2 may be adjusted, and the functional glass 4 may be irradiated with desired polarized light by emitting the display light showing the display image as random light from the display image projection unit 2, reflecting the display light on the reflecting mirror 3, and passing the display light through a polarizing plate before this reflected light reaches the functional glass 4.

<Incidence angle to display projector>

As shown in Fig. 5, in the HUD system according to the present invention, when the Brewster angle of the S polarized light or the P polarized light to the functional glass 4 is defined as $\alpha$, it is preferable that an incidence angle 8 at which light emitted from the display image projection unit 2 comes into the functional glass 4 as a display medium be in the range of $\alpha$ - 10° to $\alpha$ + 10°, and it is more preferable that the incidence angle 8 be in the range of $\alpha$ - 5° to $\alpha$ + 5°. As shown in Fig. 5, the incidence angle 8 means an angle which an axis perpendicular to the surface of the display medium (functional glass 4) and light which comes into the surface of the display medium form.

When the 1/2 wavelength plate is used as the optical functional layer, the display medium is the functional glass 4, and display light emitted from the display image projection unit 2 is S polarized light in one embodiment of the HUD system of the present invention, the reflection of the P polarized light converted by the functional glass 4 on the glass plate on the outer side of the car is suppressed, and a double image can be prevented by making the S polarized light emitted from the display image projection unit 2 come in at the incidence angle 8 in the range of $\alpha$ -10° to $\alpha$ +10°, namely near the Brewster angle, preferably at the Brewster angle $\alpha$ to the axis perpendicular to the surface of the functional glass 4. That is, when the incidence angle 8 of the S polarized light is less than $\alpha$ - 10° or more than $\alpha$ + 10°, the incidence angle 8 of the S polarized light is out of the neighborhood of the Brewster angle, the reflectance of the P polarized light converted with the 1/2 wavelength plate may therefore increase, and a double image may be formed.

Also when a laminate in which one or more circularly polarized reflecting layers (cholesteric liquid crystal layers) are clamped with two 1/4 wavelength plates is used as the optical functional layer, the display medium is the functional glass 4, and display light emitted from the display image projection unit 2 is P polarized light in another embodiment of the HUD system of the present invention, the configuration is similar. Since reflected light from the road surface is generally S polarized light, polarization sunglasses are designed to absorb S polarized light. In a conventional HUD system using S polarized light, the visibility of the display image in the HUD through polarization sunglasses therefore decreases extremely. Meanwhile, in the case of the HUD system in which P polarized light reaches the observer and which uses P polarized light, the formation of a double image can be suppressed, and the visibility of the display image can be enhanced also when the polarization sunglasses are worn. When the circularly polarized reflecting layer is a cholesteric liquid crystal layer, the circularly polarized light transmitted through the circularly-polarized reflecting layer is converted into the original P polarized light with the second 1/4 wavelength plate in which the slow axis is disposed perpendicularly to the slow axis of the first 1/4 wavelength plate. The converted P polarized light also comes in near the Brewster angle to the

outer glass surface of the second 1/4 wavelength plate on the outer side of the car in the same way. Therefore, the reflectance of the P polarized light on the outer glass surface of the second 1/4 wavelength plate on the outer side of the car can be also greatly reduced, and the formation of the double image is greatly reduced.

In the head-up display system of the present invention, the polarization axis conversion performance which the 1/2 wavelength plate or the 1/4 wavelength plate exhibits can be enhanced by controlling the angle θ which the polarization axis of S polarized light or P polarized light which comes into the optical laminate and the slow axis of the 1/2 wavelength plate or the 1/4 wavelength plate provided in the optical laminate form. Detail about each θ was as described above using Expressions (5) and (6). In such a case, it is particularly preferable to use the 1/2 wavelength plate or the 1/4 wavelength plate including a polymerizable liquid crystal layer as a layer having the action of converting the polarization axis from the viewpoints of the controllability of the slow axis of the 1/2 wavelength plate or the 1/4 wavelength plate and manufacturing cost. As long as the wavelength dispersibility of the 1/2 wavelength plate or the 1/4 wavelength plate as mentioned above is suitable for the head-up display, the wavelength dispersibility is not particular limited. It is desirable that the 1/2 wavelength plate or the 1/4 wavelength plate have reverse wavelength dispersibility to convert polarized light in a wide wavelength range in the visible light region accurately.

A polymer generally has normal dispersion, wherein the absolute value of the birefringent increases on the short wavelength side, and the reverse wavelength dispersibility is obtained using a liquid crystal compound in which the birefringence increases on the long wavelength side by controlling the value of the birefringence Δn of each wavelength of the visible light. The reverse wavelength dispersibility is also obtained by lamination in combination of the slow axes of a plurality of phase difference plates having suitable phase difference values depending on the wavelength dispersion characteristic of the liquid crystal compound in a suitable positional relationship. Also, in the case of the 1/2 wavelength plate or the 1/4 wavelength plate in which the plurality of phase difference plates is laminated in combination in a suitable positional relationship, as to the slow axis angle of each phase difference plate, the 1/2 wavelength plate or the 1/4 wavelength plate exhibits good polarization axis conversion performance by controlling the angle θ which the polarization axis of the S polarized light or the P polarized light which comes into the optical laminate and the slow axis of the 1/2 wavelength plate or the 1/4 wavelength plate form appropriately as mentioned above. Consequently, the display image can be visually confirmed further clearly.

<Display image projection unit>

As long as the display image projection unit 2 used for the HUD system of the present invention can emit desired P polarized light or a S polarized light until the desired P polarized light or a S polarized light finally reaches the functional glass 4, the display image projection unit 2 is not particularly limited. The examples include liquid crystal displays (LCDs) and organic EL displays (OELDs). When the display image projection unit 2 is a liquid crystal display, emission light is usually linear polarized light, and the liquid crystal display can therefore be used as the display image projection unit 2 as it is. Meanwhile, when the display image projection unit 2 is an organic EL display, for example, as shown in Fig. 6, the display image projection unit 2 may include a light source 2A and a polarizing plate 2B which can emit P polarized light or S polarized light. When the HUD system is used for a car, optical members such as a polarizing plate and a 1/2 wavelength plate are disposed on a light-emitting opening such as a dashboard, and the liquid crystal display and the organic EL display can also be adjusted so that P polarized light or S polarized light can be emitted from the display image projection units 2. The light source used for the display image projection units 2 is not particularly limited, and the light source such as a laser light source, an LED source, or the like can be used. The display image can be clearly projected more effectively by setting the central reflection wavelength of the phase difference element forming an optical functional layer so that the central reflection wavelength corresponds to the emission spectrum of the above-mentioned light source.

<Reflecting mirror>

The HUD system of the present invention may include a reflecting mirror 3 if needed. As long as the reflecting mirror 3 can reflect display light from the display image projection units 2 toward the functional glass 4, the reflecting mirror 3 is not particularly limited. For example, the reflecting mirror includes a plane mirror, a concave mirror, or the like. When a concave mirror is used as the reflecting mirror 3, the concave mirror can also magnify the display light from the display at a predetermined magnifying power.

Examples

Hereinafter, the present invention will be described in detail with Examples. In the Examples, "part" means part by mass. The present invention is not limited to the following Examples. Room temperature is defined as the range of 20°C ± 5°C unless otherwise specified.

[Example 1]

<Preparation of coating liquid (liquid crystal composition)>

A coating liquid A, which has a composition shown in Table 1, was prepared.

[Table 1]

| Material (type) | Material name (maker) | Prescribed amount (part) |
|---|---|---|
| Polymerizable liquid crystal | LC242 (BASF SE) | 25 |
| Photopolymerization initiator | Irgacure907 (BASF SE) | 1 |
| Solvent | Toluene | 74 |

<Manufacturing of optical functional layer>

Two 1/2 wavelength plates were manufactured in the following procedure using the prepared coating liquid A. TAC films (P960 manufactured by TacBright Optronics Corp.: thickness: 60 μm) subjected to rubbing treatment in the method described in Example 1 in Japanese Patent Application Laid-Open No. 2002-90743 were used as supporting substrates. The rubbing angles were set so that angles which the longitudinal direction of the film and the slow axes of the 1/2 wavelength plates form (hereinafter also referred to as "slow axis angles") were 71.5° and 26.5°, respectively.

(i) The coating liquid A was applied to the rubbing-treated surface of the TAC film at room temperature using a wire bar so that the thickness of each 1/2 wavelength plate obtained after drying was 2 μm.
(ii) The obtained coating film was heated at 50°C for 2 minutes, and the solvent was removed to form a liquid crystal phase. Subsequently, UV irradiation was performed with a high-pressure mercury lamp (manufactured by HARISON TOSHIBA LIGHTING CORPORATION) at a generating power of 120 W for 5 to 10 seconds, the liquid crystal phase was fixed, the polymerizable liquid crystal layers were layered on the TAC films to manufacture 1/2 wavelength plates. The phase difference values of the 1/2 wavelength plates were measured with an automatic birefringence meter ("KOBRA-21ADH" manufactured by Oji Scientific Instruments Co., Ltd.), so that two types of 1/2 wavelength plates in which the phase difference values at 546 nm were 290 nm (slow axis an angle: 71.5°) and 250 nm (slow axis an angle: 26.5°), respectively, were obtained.
(iii) As to the 1/2 wavelength plates manufactured in (i) to (ii), the polymerizable liquid crystal layer sides were laminated using an acrylic pressure sensitive adhesive (produced by Soken Chemical & Engineering Co., Ltd., SK Dyne 906) with the longitudinal directions of the films matched to manufacture an optical functional layer.

The average transmittance in the visible wavelength region in the front direction of for each 1/2 obtained wavelength plate (incidence angle: 56°) was around 79%, and the polarized light transmittance was around 10%. The polarized light transmittance was measured using an "ultraviolet, visible, and near-infrared spectrophotometer UV-3600" manufactured by SHIMADZU CORPORATION with the optical laminate set between polarizing plates disposed parallelly so that the incidence angle was 56°.

<Manufacturing of polyvinyl acetal resin layer>

Triethylene glycol di-2-ethylhexanoate (3GO) was blended with 100 parts by mass of a polyvinyl butyral resin at each ratio shown in Table 2 (0 to 35 parts by mass) as a plasticizer, a solution in which 0.2 parts by mass of 2,6-di-tert-butyl-p-cresol was dissolved in methyl ethyl ketone was further added as an antioxidant, and the mixture was melt-kneaded with a mixing roll homogenously. Then, the obtained kneaded material was press-molded at 150°C for 30 minutes using a pressing molding machine to manufacture polyvinyl butyral resin films (30cm in length × 30cm in width) having a thickness of 0.38 mm. The photoelastic coefficient of each polyvinyl butyral resin film (PVB film) in which the plasticizer was blended at a predetermined addition ratio was measured using a spectroscopic ellipsometer ("M-220" manufactured by JASCO Corporation). The results are shown in Table 2.

[Table 2]

| PVB film | Plasticizer ratio/part by mass | Photoelastic coefficient(Pe)/$Pa^{-1}$ |
|---|---|---|
| A | 35 | $4.43 \times 10^{-10}$ |

(continued)

| PVB film | Plasticizer ratio/part by mass | Photoelastic coefficient(Pe)/$Pa^{-1}$ |
|---|---|---|
| B | 0 | $8.99 \times 10^{-13}$ |
| C | 5 | $1.49 \times 10^{-12}$ |
| D | 10 | $2.04 \times 10^{-12}$ |
| E | 15 | $5.90 \times 10^{-12}$ |
| F | 20 | $1.77 \times 10^{-11}$ |
| G | 25 | $4.63 \times 10^{-11}$ |
| H | 30 | $1.85 \times 10^{-10}$ |

<Manufacturing of optical laminate>

A PVB film A, in which 35 parts by mass of the plasticizer was blended in 100 parts by mass of the polyvinyl butyral resin, and a PVB film B, in which the plasticizer was not blended in 100 parts by mass of the polyvinyl butyral resin (0 parts by mass), were cut out to a size having a height of 10 cm × a width of 10 cm. In the manufactured optical functional layer, the PVB film A was disposed on the TAC on the 1/2 wavelength plate side having a phase difference value of 290 nm, and the PVB film B was disposed on the TAC on the 1/2 wavelength plate side having a phase difference value of 250 nm, and the laminate was subsequently pressurized and press-fit with a laminator to manufacture an optical laminate in which the 1/2 wavelength plates were provided between the two film that are the PVB film A and the PVB film B.

<Manufacturing of functional glass>

The manufactured optical laminate was disposed between two glass plates having the same size with a height of 10 cm × a width of 10 cm as the optical laminate, and a thickness of 2 mm, and the laminate was subsequently pressurized and heated to manufacture functional glass. First, an optical laminate and a transparent glass plate were laid on a transparent glass plate sequentially. This was wrapped in a rubber bag, deaerated in an autoclave heated at 90°C for 30 minutes, and subjected to preliminary adhesion. This was cooled to room temperature, subsequently taken out of the rubber bag, and heated and pressurized in the autoclave at 140°C under a high pressure of 14 $kg/cm^2$ for 30 minutes again. Functional glass into which the optical laminate was inserted and which has good appearance was manufactured.

<Evaluation of nonuniformity of polarized light transmittance in surface>

The polarized light transmittance of the obtained functional glass was measured in the wavelength range of 400 nm or more and 750 nm or less. The polarized light transmittance was measured using an "ultraviolet, visible, and near-infrared spectrophotometer UV-3600" manufactured by SHIMADZU CORPORATION with the optical laminate set between polarizing plates disposed parallelly so that the incidence angle was 56°. The glass central portion X and the point Y 2.5 cm away from the central portion X was defined as measurement points, and the polarized light transmittance of each measurement point was measured. The results are shown in Table 3. When both measurement points have transmittances of 6% or less in the wavelength range of 450 nm or more and 700 nm or less, and there was not a great difference in the waveform of the transmittance. It was therefore determined that there was not the nonuniformity of the polarized light transmittance in the surface of the optical laminate (hereinafter also referred to as the nonuniformity in the surface). As to the determination standard of the nonuniformity of the polarized light transmittance, it was estimated hereinafter that when both the transmittances of the measurement points X and Y were 6% or less, there was not nonuniformity in the surface, and when the transmittance of the measurement point X was 6% or less, and the transmittance of the measurement point Y was more than 6%, there was nonuniformity in the surface in the wavelength range of 450 nm or more and 700 nm or less.

<Manufacturing of head-up display and evaluation of display image>

A head-up display was manufactured in the disposition as shown in Fig. 4. As a display image projection unit 2, a liquid crystal display panel which enabled the emission of S polarized light to functional glass 4 was installed, and the functional glass manufactured above was used as functional glass 4. The position of the optical laminate included in the functional glass 4 was adjusted so that the incidence angle of S polarized light from the display image projection unit 2 was the Brewster angle of glass (around 56°) in a dark room. When the glass plate on the 1/2 wavelength plate side having a

phase difference value of 290 nm was installed on the display image projection unit 2 side, and an image was projected, the display image was projected brightly and clearly.

<Evaluation of nonuniformity of double image in surface: evaluation of uniformity of polarized light conversion performance of 1/2 wavelength plate in surface>

A line image in the horizontal direction was projected under a condition under which S polarized light was emitted from the display image projection unit 2 to the functional glass 4 manufactured above in the disposition shown in Fig. 5, and the reflected images on the positions at the glass central portion X and the measurement point Y 2.5 cm away from the central portion X were visually confirmed. The reflection brightness of the line image on the air interface of a glass plate B located oppositely to a glass plate A (non-main image) was enough low as compared with the reflection brightness of the line image on the air interface of the glass plate A on the side into which S polarized light comes from the display image projection unit 2 (main image) at both positions which are the central portion X and the measurement point Y among the configurations of the functional glass 4, and the image projected on the functional glass 4 was hardly visually confirmed doubly. Therefore, the visibility of the image in a wide range was good, it was determined that there was not the nonuniformity of the double image in the surface. Hereinafter, when the ratio of the brightness of the non-main image to that of the main image at the position of the measurement point Y was high as compared with at the position of the central portion X, and the image projected on the functional glass 4 was easily confirmed visually and doubly, it was determined that there was the nonuniformity of the double image in the surface.

[Example 2]

In the manufacturing of the above-mentioned optical laminate, functional glass and a head-up display were manufactured in the same way as Example 1 except that a PVB film C was used instead of the PVB film B, and the nonuniformity of the polarized light transmittance and the double image in the surface was evaluated. The results are shown in Table 3.

[Example 3]

In the manufacturing of the above-mentioned optical laminate, functional glass and a head-up display were manufactured in the same way as Example 1 except that a PVB film D was used instead of the PVB film B, and the nonuniformity of the polarized light transmittance and the double image in the surface was evaluated. The results are shown in Table 3.

[Example 4]

In the manufacturing of the above-mentioned optical laminate, functional glass and a head-up display were manufactured in the same way as Example 1 except that a PVB film E was used instead of the PVB film B, and the nonuniformity of the polarized light transmittance and the double image in the surface was evaluated. The results are shown in Table 3.

[Example 5]

In the manufacturing of the above-mentioned optical laminate, functional glass and a head-up display were manufactured in the same way as Example 1 except that a PVB film F was used instead of the PVB film B, and the nonuniformity of the polarized light transmittance and the double image in the surface was evaluated. The results are shown in Table 3.

[Comparative Example 1]

In the manufacturing of the above-mentioned optical laminate, functional glass and a head-up display were manufactured in the same way as Example 1 except that a PVB film G was used instead of the PVB film B, and the nonuniformity of the polarized light transmittance and the double image in the surface was evaluated. The results are shown in Table 3.

[Comparative Example 2]

In the manufacturing of the above-mentioned optical laminate, functional glass and a head-up display were

manufactured in the same way as Example 1 except that a PVB film H was used instead of the PVB film B, and the nonuniformity of the polarized light transmittance and the double image in the surface was evaluated. The results are shown in Table 3.

[Comparative Example 3]

In the manufacturing of the above-mentioned optical laminate, functional glass and a head-up display were manufactured in the same way as Example 1 except that a PVB film A was used instead of the PVB film B, and the nonuniformity of the polarized light transmittance and the double image in the surface was evaluated. The results are shown in Table 3.

[Table 3]

| | PVB film (Pe1) | PVB film (Pe2) | Photoelastic coefficient ratio (Pe2/Pe1) | Polarized light transmittance (%) | | | Nonuniformity in surface | |
|---|---|---|---|---|---|---|---|---|
| | | | | X | Y | Y/X | Polarized light transmittance | Double image |
| Example 1 | B | A | 493 | 2.4 | 2.1 | 0.88 | Good | Good |
| Example 2 | C | A | 297 | 3.3 | 3.2 | 0.97 | Good | Good |
| Example 3 | D | A | 217 | 2.6 | 3.2 | 1.23 | Good | Good |
| Example 4 | E | A | 75.1 | 3.6 | 5.9 | 1.64 | Good | Good |
| Example 5 | F | A | 25.1 | 3.3 | 8.4 | 2.55 | Good | Good |
| Comparative Example 1 | G | A | 9.56 | 3.1 | 10.5 | 3.39 | Poor | Poor |
| Comparative Example 2 | H | A | 2.39 | 4.4 | 14.5 | 3.30 | Poor | Poor |
| Comparative Example 3 | A | A | 1.00 | 3.9 | 13.1 | 3.36 | Poor | Poor |

From the results of Examples 1 to 5 and Comparative Examples 1 to 3, when at least one has a photoelastic coefficient in a predetermined range prescribed in the present invention (PeA) among the two PVB films (the polyvinyl acetal resin layers) included in the optical laminate, there was not the nonuniformity in the surface in either polarized light transmittance or the double image, and such optical laminates were excellent in performance uniformity in the surface. Meanwhile, when both of the photoelastic coefficients of the two PVB films included in the optical laminate were out of the range of the photoelastic coefficient prescribed in the present invention (PeA), the polarized light transmittance at the position away from the central portion in the surface of the functional glass (glass central portion X) increased, and the nonuniformity of the polarized light transmittance in the surface occurred. Therefore, when S polarized light which comes into functional glass was transmitted through the optical laminate in the projection of the head-up display, much of the S polarized light component remains without being converted into P polarized light. Therefore, the S polarized light is easily reflected on the air interface of the glass plate on the surface opposite to the surface into which S polarized light comes. Consequently, since the image projected on the functional glass was easily confirmed visually and doubly, the nonuniformity of the double image in the surface was great, and the visibility of the image in a wide range decreased.

It is found that when an optical laminate according to the present invention is thus applied to functional glass for a head-up display, an optical laminate in which S polarized light or P polarized light which comes in projection in the head-up display can be converted into P polarized light or S polarized light efficiently without nonuniformity in a wider range and which exhibits excellent polarized light conversion performance in a wide range is obtained. When the optical laminate according to the present invention is applied to a HUD system, a very clear display image can be visually confirmed in a wide range.

Industrial Applicability

When an optical laminate according to the present invention is applied to a head-up display system, the nonuniformity of double image formation depending on the projection position is removed, a double image can be suppressed without depending on the projection position, and a viewer can use the head-up display system without stress

in a wide range.

List of Reference Signs

1: Observer, 2: Display image projection unit, 2A: Light source, 2B: Polarizing plate, 3: Reflecting mirror, 4: Functional glass, 5: Optical path, 6: Virtual image, 8: Incidence angle, 10: Optical laminate, 20: Functional glass, 101: Polyvinyl acetal resin layer, 102: Optical functional layer

## Claims

1. An optical laminate (10) for a head-up display comprising: (A) at least one polyvinyl acetal resin layer (101) having a photoelastic coefficient (PeA) in a range of the following Expression (1); (B) at least one optical functional layer (102); and (C) at least one polyvinyl acetal resin layer having a photoelastic coefficient (PeC) in a range of the following Expression (2), wherein
the optical functional layer (102) is (B-1) a 1/2 wavelength plate, (B-2) a 1/4 wavelength plate, (B-3) a laminate of a 1/2 wavelength plate and a circularly polarized light reflecting layer, (B-4) a laminate of a 1/4 wavelength plate and a circularly polarized light reflecting layer, or (B-5) a film having a P polarized light reflecting function:
[Expression 1]

$$\left|PeA\right| \leq 4.0 \times 10^{-11}\ Pa^{-1}\ \ldots (1).$$

[Expression 2]

$$5.0 \times 10^{-11}\ Pa^{-1} \leq PeC \leq 5.0 \times 10^{-9}\ Pa^{-1}\ \ldots (2).$$

2. The optical laminate (10) according to claim 1, comprising two polyvinyl acetal resin layers (101) different in the photoelastic coefficient (Pe), wherein a ratio of a photoelastic coefficient of one of the polyvinyl acetal resin layers (101) (Pe2) to a photoelastic coefficient of the other of the polyvinyl acetal resin layers (101) (Pe1) (PeR) satisfies the following Expression (3), and Pe1 < Pe2:
[Expression 3]

$$10 \leq PeR \leq 1000\ \ldots (3).$$

3. The optical laminate (10) according to claim 1 or 2, wherein the polyvinyl acetal resin layer (101) has a thickness of 10 μm or more and 800 μm or less.

4. The optical laminate (10) according to any one of claims 1 to 3, wherein the polyvinyl acetal resin layer (101) is a polyvinyl butyral resin layer.

5. The optical laminate (10) according to claim 1, wherein the 1/2 wavelength plate includes a polymerizable liquid crystal layer as a layer having the action of converting a polarization axis.

6. The optical laminate (10) according to claim 1, wherein the 1/4 wavelength plate includes a polymerizable liquid crystal layer as a layer having the action of converting a polarization axis.

7. Functional glass (20) for a head-up display, comprising: the optical laminate (10) according to any one of claims 1 to 6; and (D) glass plates.

8. A head-up display system, comprising the optical laminate (10) according to any one of claims 1 to 6, or the functional glass (20) according to claim 7.

9. The head-up display system according to claim 8, comprising the functional glass (20),
wherein an incidence angle (8) at which light emitted from a display image projection unit (2) comes into the functional glass (20) is in a range of α - 10° to α + 10°, with a Brewster angle defined as α.

## Patentansprüche

1. Optisches Laminat (10) für ein Head-up-Display, umfassend: (A) mindestens eine Polyvinylacetalharzschicht (101) mit einem photoelastischen Koeffizienten (PeA) in einem Bereich der folgenden Gleichung (1); (B) mindestens eine optische Funktionsschicht (102); und (C) mindestens eine Polyvinylacetalharzschicht mit einem photoelastischen Koeffizienten (PeC) in einem Bereich der folgenden Gleichung (2), wobei
die optische Funktionsschicht (102) ist (B-1) eine 1/2-Wellenlängenplatte, (B-2) eine 1/4-Wellenlängenplatte, (B-3) ein Laminat aus einer 1/2-Wellenlängenplatte und einer zirkular polarisierten Lichtreflexionsschicht, (B-4) ein Laminat aus einer 1/4-Wellenlängenplatte und einer zirkular polarisierten Lichtreflexionsschicht oder (B-5) eine Folie mit einer P-polarisierten Lichtreflexionsfunktion:
[Gleichung 1]

$$|PeA| \leq 4{,}0 \times 10^{-11}\ Pa^{-1}\ ...\ (1).$$

[Gleichung 2]

$$5{,}0 \times 10^{-11}\ Pa^{-1} \leq PeC \leq 5{,}0 \times 10^{-9}\ Pa^{-1}\ ...\ (2).$$

2. Optisches Laminat (10) gemäß Anspruch 1, umfassend zwei Polyvinylacetalharzschichten (101), die sich im photoelastischen Koeffizienten (Pe) unterscheiden,
wobei das Verhältnis des photoelastischen Koeffizienten einer der Polyvinylacetalharzschichten (101) (Pe2) zum photoelastischen Koeffizienten der anderen der Polyvinylacetalharzschichten (101) (Pe1) (PeR) die folgende Gleichung (3) erfüllt und Pe1 < Pe2 ist:
[Gleichung 3]

$$10 \leq PeR \leq 1000\ ...\ (3).$$

3. Optisches Laminat (10) gemäß Anspruch 1 oder 2, wobei die Polyvinylacetalharzschicht (101) eine Dicke von 10 µm oder mehr und 800 µm oder weniger aufweist.

4. Optisches Laminat (10) gemäß einem der Ansprüche 1 bis 3, wobei die Polyvinylacetalharzschicht (101) eine Polyvinylbutyralharzschicht ist.

5. Optisches Laminat (10) nach Anspruch 1, wobei die 1/2-Wellenlängenplatte eine polymerisierbare Flüssigkristallschicht als Schicht mit der Wirkung der Umwandlung einer Polarisationsachse umfasst.

6. Optisches Laminat (10) nach Anspruch 1, wobei die 1/4-Wellenlängenplatte eine polymerisierbare Flüssigkristallschicht als Schicht mit der Wirkung der Umwandlung einer Polarisationsachse umfasst.

7. Funktionsglas (20) für ein Head-up-Display, umfassend: das optische Laminat (10) gemäß einem der Ansprüche 1 bis 6; und (D) Glasplatten.

8. Ein Head-up-Display-System, umfassend das optische Laminat (10) gemäß einem der Ansprüche 1 bis 6 oder das Funktionsglas (20) gemäß Anspruch 7.

9. Das Head-up-Display-System gemäß Anspruch 8, umfassend das Funktionsglas (20), wobei ein Einfallswinkel (8), unter dem von einer Bildprojektionseinheit (2) emittiertes Licht in das Funktionsglas (20) eintritt, in einem Bereich von $\alpha$ - 10° bis $\alpha$ + 10° liegt, wobei ein Brewsterwinkel als $\alpha$ definiert ist.

## Revendications

1. Laminé optique (10) pour un affichage tête haute comprenant : (A) au moins une couche de résine polyvinylacétal (101) ayant un coefficient photoélastique (PeA) dans une plage de l'expression (1) suivante ; (B) au moins une couche fonctionnelle optique (102); et (C) au moins une couche de résine polyvinylacétal ayant un coefficient photoélastique (PeC) compris dans la plage de l'expression (2) suivante, dans laquelle

la couche fonctionnelle optique (102) est (B-1) une plaque à demi-longueur d'onde, (B-2) une plaque à quart de longueur d'onde, (B-3) un stratifié d'une plaque à demi-longueur d'onde et d'une couche réfléchissant la lumière polarisée circulairement, (B-4) un stratifié d'une plaque à quart de longueur d'onde et d'une couche réfléchissant la lumière polarisée circulairement, ou (B-5) un film ayant une fonction réfléchissant la lumière polarisée P :
[Expression 1]

$$|PeA| \leq 4,0 \times 10^{-11}\ Pa^{-1}\ ...\ (1).$$

[Expression 2]

$$5,0 \times 10^{-11}\ Pa^{-1} \leq PeC \leq 5,0 \times 10^{-9}\ Pa^{-1}\ ...\ (2).$$

**2.** Le stratifié optique (10) selon la revendication 1, comprenant deux couches de résine polyvinylacétal (101) différentes en termes de coefficient photoélastique (Pe), dans lequel le rapport entre le coefficient photoélastique de l'une des couches de résine polyvinylacétal (101) (Pe2) par rapport au coefficient photoélastique de l'autre couche de résine polyvinylacétal (101) (Pe1) (PeR) satisfait l'expression (3) suivante, et Pe1 < Pe2 :
[Expression 3]

$$10 \leq PeR \leq 1000\ ...\ (3).$$

**3.** Le stratifié optique (10) selon la revendication 1 ou 2, dans lequel la couche de résine polyvinylacétal (101) a une épaisseur comprise entre 10 $\mu$m et 800 $\mu$m.

**4.** Laminé optique (10) selon l'une quelconque des revendications 1 à 3, dans lequel la couche de résine polyvinylacétal (101) est une couche de résine polyvinylbutyral.

**5.** Laminé optique (10) selon la revendication 1, dans lequel la plaque à demi-longueur d'onde comprend une couche de cristaux liquides polymérisables en tant que couche ayant pour action de convertir un axe de polarisation.

**6.** Laminé optique (10) selon la revendication 1, dans lequel la plaque à 1/4 de longueur d'onde comprend une couche de cristal liquide polymérisable en tant que couche ayant pour action de convertir un axe de polarisation.

**7.** Verre fonctionnel (20) pour un affichage tête haute, comprenant : le stratifié optique (10) selon l'une quelconque des revendications 1 à 6; et (D) des plaques de verre.

**8.** Système d'affichage tête haute, comprenant le stratifié optique (10) selon l'une quelconque des revendications 1 à 6, ou le verre fonctionnel (20) selon la revendication 7.

**9.** Système d'affichage tête haute selon la revendication 8, comprenant le verre fonctionnel (20), dans lequel un angle d'incidence (8) auquel la lumière émise par une unité de projection d'image d'affichage (2) pénètre dans le verre fonctionnel (20) se situe dans une plage de $\alpha$ - 10° à $\alpha$ + 10°, avec un angle de Brewster défini comme a.

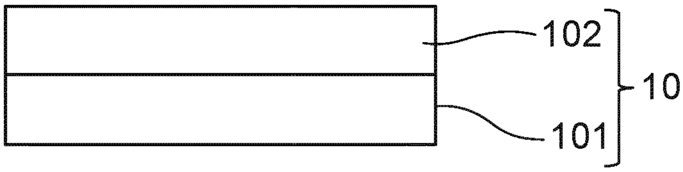


FIG.1

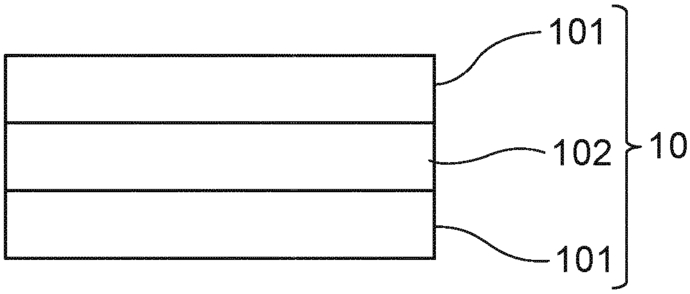


FIG.2

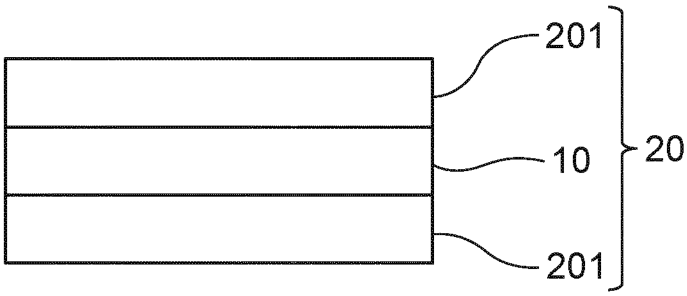


FIG.3

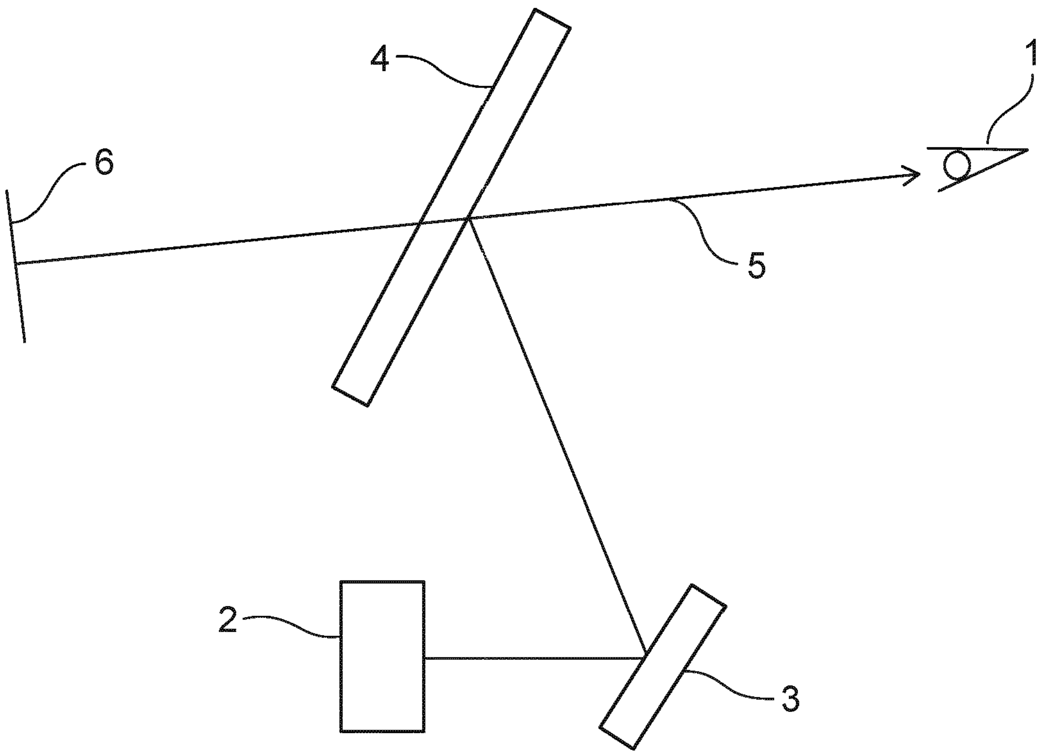


FIG.4

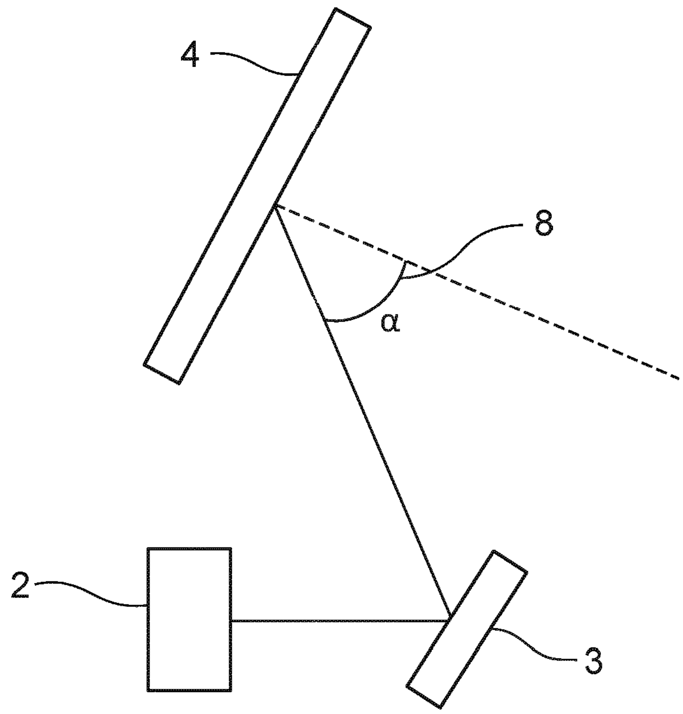


FIG.5

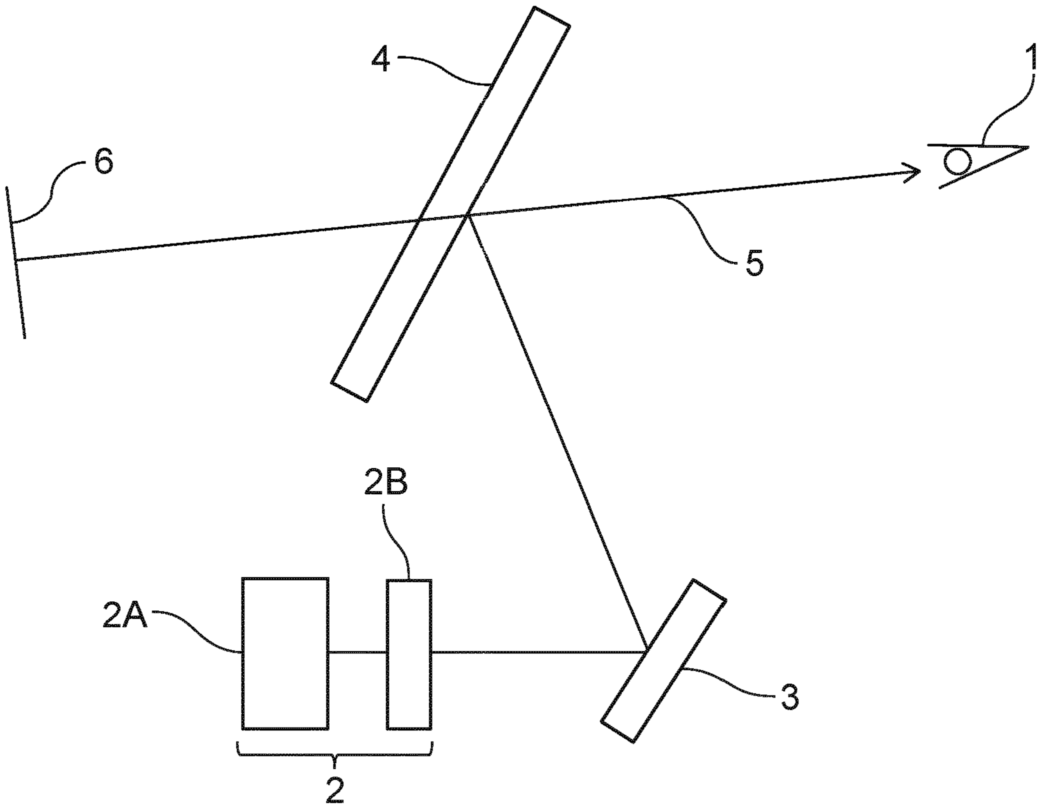


FIG.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020067338 A1
- US 2017235030 A1
- JP 2005091900 A
- JP H0640271 B
- JP 5973109 B
- JP 2003315556 A
- JP 2004029824 A
- JP 2002090743 A